# EUROPEAN PATENT APPLICATION

(11) **EP 4 711 908 A1**
(43) Date of publication of application: **18.03.2026**
(21) Application number: 24803414.2
(22) Date of filing: 26.04.2024
(51) Int. Cl.: G06F 3/04845, A63F 13/42, A63F 13/49, A63F 13/53, A63F 13/85, G06F 3/0481

(54) **INFORMATION PROCESSING DEVICE, INFORMATION PROCESSING METHOD, AND PROGRAM**

(30) Priority: 10.05.2023 JP 2023077819
(71) Applicant: Sony Group Corporation, Tokyo 108-0075 (JP)
(72) Inventor: SO, Kumiko, Tokyo 108-0075 (JP); TAKURA, Kento, Tokyo 108-0075 (JP)
(74) Representative: D Young & Co LLP
(86) International application number: PCT/JP2024/016494
(87) International publication number: WO 2024/232301

(57) **Abstract**

An information processing apparatus includes a control unit that performs processing for storing an image displayed on a screen in response to a screenshot operation, and that performs processing for determining a group operation for one or a plurality of the screenshot operations, and displaying a notification according to the screenshot operation in response to a determination that the group operation has ended.

## Description

### TECHNICAL FIELD

The present technology relates to an information processing apparatus, an information processing method, and a program, and mainly relates to a screenshot function.

### BACKGROUND ART

In recent years, users can have various experiences by installing various applications on a terminal device such as a personal computer or a smartphone. Some virtual images of game applications and the like, for example, among the various applications are stored as screenshots.

Patent Document 1 below discloses a technique for performing a process for capturing a screenshot image and a process for capturing a game video by operating a predetermined input unit while a game image is displayed.

### CITATION LIST

### PATENT DOCUMENT

Patent Document 1: Japanese Patent Application Laid-Open No. 2022-106910

### SUMMARY OF THE INVENTION

### PROBLEMS TO BE SOLVED BY THE INVENTION

During execution of a game application or the like, however, it may be difficult for a user to perform a screenshot operation while concentrating on a game screen. For example, if the screenshot operation is complicated, it is easy to miss a photo opportunity.

In addition, when a screenshot is taken, the user is notified that an image has been saved, but the notification can undesirably appear in a screenshot taken immediately thereafter.

Therefore, the present disclosure proposes a technique capable of enhancing usability of screenshots.

### SOLUTIONS TO PROBLEMS

An information processing apparatus in the present technology includes a control unit that performs processing for storing an image displayed on a screen in response to a screenshot operation, and that performs processing for determining a group operation for one or a plurality of the screenshot operations, and displaying a notification according to the screenshot operation in response to a determination that the group operation has ended.

The information processing apparatus performs the storage processing according to a user's screenshot operation, but does not necessarily perform the notification every time one operation is performed, and performs the notification when one or a plurality of screenshot operations as a group operation has ended.

### BRIEF DESCRIPTION OF DRAWINGS

Fig. 1 is a block diagram of an information processing apparatus according to an embodiment of the present technology.
Fig. 2 is an explanatory diagram of a screenshot operation by an extended function.
Fig. 3 is another explanatory diagram of the screenshot operation by the extended function.
Fig. 4 is an explanatory diagram of a notification after a screenshot operation.
Fig. 5 is an explanatory diagram of a screenshot operation using hardware keys according to the embodiment.
Fig. 6 is another explanatory diagram of the screenshot operation using hardware keys according to the embodiment.
Fig. 7 is an explanatory diagram of a notification after a screenshot operation.
Fig. 8 is an explanatory diagram of a screenshot operation and a notification according to the embodiment.
Fig. 9 is another explanatory diagram of the screenshot operation and the notification according to the embodiment.
Fig. 10 is another explanatory diagram of the screenshot operation using hardware keys according to the embodiment.
Fig. 11 is an explanatory diagram of one cycle of screenshot operations according to the embodiment.
Fig. 12 is an explanatory diagram of notifications about screenshots according to the embodiment.
Fig. 13 is another explanatory diagram of the notifications about screenshots according to the embodiment.
Fig. 14 is a flowchart illustrating an example of a process corresponding to screenshot operations according to the embodiment.
Fig. 15 is an explanatory diagram of setting of a threshold time of one cycle according to the embodiment.
Fig. 16 is an explanatory diagram of update of the threshold time of one cycle according to the embodiment.
Fig. 17 is a flowchart of a process for setting the threshold time according to the embodiment.
Fig. 18 is a flowchart of a process for updating the threshold time according to the embodiment.
Fig. 19 is an explanatory diagram of a marking operation during moving image storage according to the embodiment.
Fig. 20 is an explanatory diagram of a user interface related to a marking operation according to the embodiment.
Fig. 21 is another explanatory diagram of the user interface related to the marking operation according to the embodiment.
Fig. 22 is a flowchart illustrating an example of a process corresponding to the marking operation according to the embodiment.
Fig. 23 is a flowchart illustrating user interface processing related to the marking operation according to the embodiment.
Fig. 24 is an explanatory diagram of a display mode for a notification having the highest importance level according to the embodiment.
Fig. 25 is an explanatory diagram of a display mode for a notification having a moderate importance level according to the embodiment.
Fig. 26 is a block diagram of hardware configuration of the information processing apparatus according to the embodiment.

### MODE FOR CARRYING OUT THE INVENTION

An embodiment will be described hereinafter in the following order.
<1. Functional Configuration>
<2. Standard Screenshot>
<3. Screen Shot as Additional Function>
<4. Marking during Moving Image Storage>
<5. Function Related to Notification>
<6. Example of Hardware Configuration>
<7. Summary and Modifications>

Note that, in the present specification and the drawings, substantially the same parts will be denoted by the same reference signs, and redundant description thereof is omitted.

In addition, in the following description and drawings, an "application" may be simply abbreviated as an "app".

In addition, an "image" in the present disclosure is used as a term including both a "still image" and a "moving image".

In addition, a screenshot may be referred to as an "SS".

### <1. Functional Configuration>

First, an example of functional configuration of an information processing apparatus 10 according to the present embodiment will be described.

The information processing apparatus 10 may be a mobile terminal, such as a smartphone or a tablet personal computer (PC), capable of executing various applications, or may be a stationary terminal installed at a user's home, office, or the like.

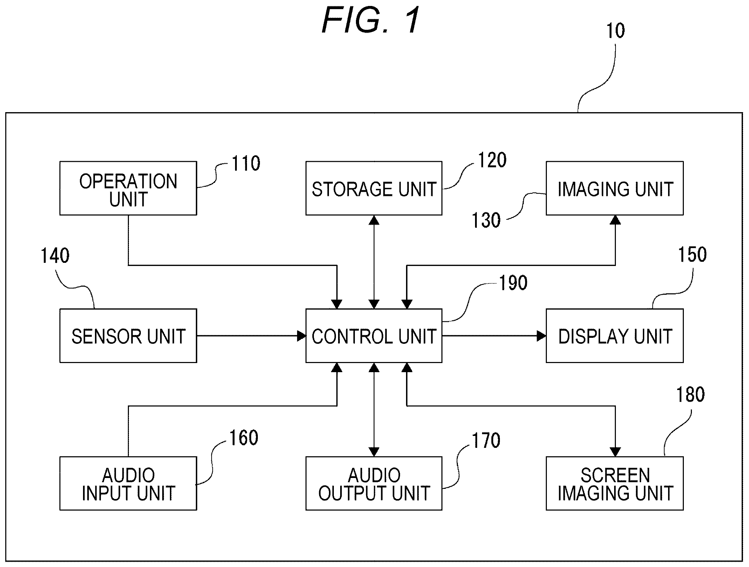

Fig. 1 is a block diagram illustrating an example of functional configuration of the information processing apparatus 10 according to the present embodiment. As illustrated in Fig. 1, the information processing apparatus 10 according to the present embodiment includes an operation unit 110, a storage unit 120, an imaging unit 130, a sensor unit 140, a display unit 150, an audio input unit 160, an audio output unit 170, a screen imaging unit 180, and a control unit 190.

### (Operation Unit 110)

The operation unit 110 detects various operations by the user, such as use of hardware keys of a main housing of the information processing apparatus 10 and device operations for applications. Examples of the device operations include touch operations and insertion of an earphone terminal into the information processing apparatus 10. Here, the touch operations refer to various contact operations on the display unit 150, such as tapping, double tapping, swiping, and pinching. In addition, the touch operations include, for example, a motion of bringing an object such as a finger close to the display unit 150.

Therefore, the operation unit 110 includes, for example, a touch panel, keys, buttons, a keyboard, a mouse, a proximity sensor, and the like. The operation unit 110 inputs detected operation information regarding the user to the control unit 190.

### (Storage Unit 120)

The storage unit 120 is a storage area for temporarily or permanently storing various programs and data. For example, the storage unit 120 stores programs and data for the information processing apparatus 10 to execute various functions. As a specific example, the storage unit 120 stores programs for executing various applications, management data for managing various settings, and the like. Of course, the above is merely an example, and types of data stored in the storage unit 120 are not particularly limited.

As the storage unit 120, for example, a storage medium such as a memory card, an internal memory of the information processing apparatus 10, or the like is used as a storage medium.

### (Imaging Unit 130)

The imaging unit 130 images, for example, a scene around the information processing apparatus 10, the user's face, and the like under the control of the control unit 190. For this purpose, the imaging unit 130 includes an imaging element. A smartphone, which is an example of the information processing apparatus 10, includes, on a display unit 150 side, a front camera for imaging the user's face and the like and, on a back side of the display unit 150, a main camera for imaging landscapes and the like.

### (Sensor Unit 140)

The sensor unit 140 has a function of collecting information regarding the user's behavior using various sensors. The sensor unit 140 includes, for example, an acceleration sensor, a gyro sensor, a geomagnetic sensor, a vibration sensor, a global navigation satellite system (GNSS) signal reception device, and the like. For example, the sensor unit 140 detects, using a gyro sensor, that the user holds the information processing apparatus 10 horizontally, and inputs the detected information to the control unit 190.

### (Display Unit 150)

The display unit 150 displays various types of visual information under the control of the control unit 190. The display unit 150 according to the present embodiment may display, for example, images, characters, and the like related to an application. For this purpose, the display unit 150 may include one of various display devices such as a liquid crystal display (LCD) device and an organic light emitting diode (OLED) display device. Furthermore, the display unit 150 can also superimpose and display a user interface (UI) of another application on a layer higher than a screen of the application being displayed.

### (Audio Input Unit 160)

The audio input unit 160 collects voices uttered by the user and the like under the control of the control unit 190. For this purpose, the audio input unit 160 includes a microphone or the like.

### (Audio Output Unit 170)

The audio output unit 170 outputs various sounds. For example, the audio output unit 170 outputs voices and sounds according to a situation of the application under the control of the control unit 190. For this purpose, the audio output unit 170 includes a speaker and an amplifier.

### (Screen Imaging Unit 180)

The screen imaging unit 180 captures a screenshot (SS) or a moving image of a screen displayed on the display unit 150 under the control of the control unit 190, and stores the screenshot or the moving image in the storage unit 120.

### (Control Unit 190)

The control unit 190 controls each component included in the information processing apparatus 10. Furthermore, the control unit 190 can control function extension for an application and restrict various functions.

Note that the function extension for an application is performed by another application. In order to distinguish between the application for which the function extension is performed and the other application that performs the function extension, these applications will be referred to as a "first application" and an "extension application", respectively.

When performing the function extension, the control unit 190 activates the extension application in addition to the first application and simultaneously controls both applications.

Details of functions of the control unit 190 will be described later.

Although an example of the functional configuration of the information processing apparatus 10 has been described, the functional configuration described above with reference to Fig. 1 is merely an example, and the functional configuration of the information processing apparatus 10 according to the present embodiment is not limited to this example.

For example, the information processing apparatus 10 need not necessarily include all of the components illustrated in Fig. 1, and may include a component such as the audio input unit 160 in another apparatus different from the information processing apparatus 10, instead. The functional configuration of the information processing apparatus 10 according to the present embodiment can be flexibly modified in accordance with specifications and operations.

In addition, the functions of each component may be performed by reading a control program describing a processing procedure for an arithmetic device such as a central processing unit (CPU) to achieve these functions from a storage medium such as a read only memory (ROM) or a random access memory (RAM) storing the control program, and interpreting and executing the program. The configuration to be used, therefore, may be appropriately changed in accordance with a technical level at a time of implementing the present embodiment. Furthermore, an example of hardware configuration of the information processing apparatus 10 will be described later.

### <2. Standard Screenshot>

A function of the information processing apparatus 10 related to a screenshot will be described.

First, a screenshot from an extended function menu 21 will be described.

The control unit 190 of the information processing apparatus 10 can control an extension application that provides an extended function for various first applications.

The first applications are, for example, game applications. The first applications, however, are not limited to game applications, and include various applications installed on the information processing apparatus 10 and used by the user, such as drawing applications, editing applications, music and video applications for viewing moving images and listening to music, and applications for recording sound or video.

With the extension application, it is possible to easily provide an extended function to the various first applications without editing source codes or the like. In addition, when providing the extended function, the extension application can operate in such a way as not to interfere with user operations on the first applications or an operating system (OS) and behavior of the first applications.

An example of an operation related to menu display of the extension application will be described.

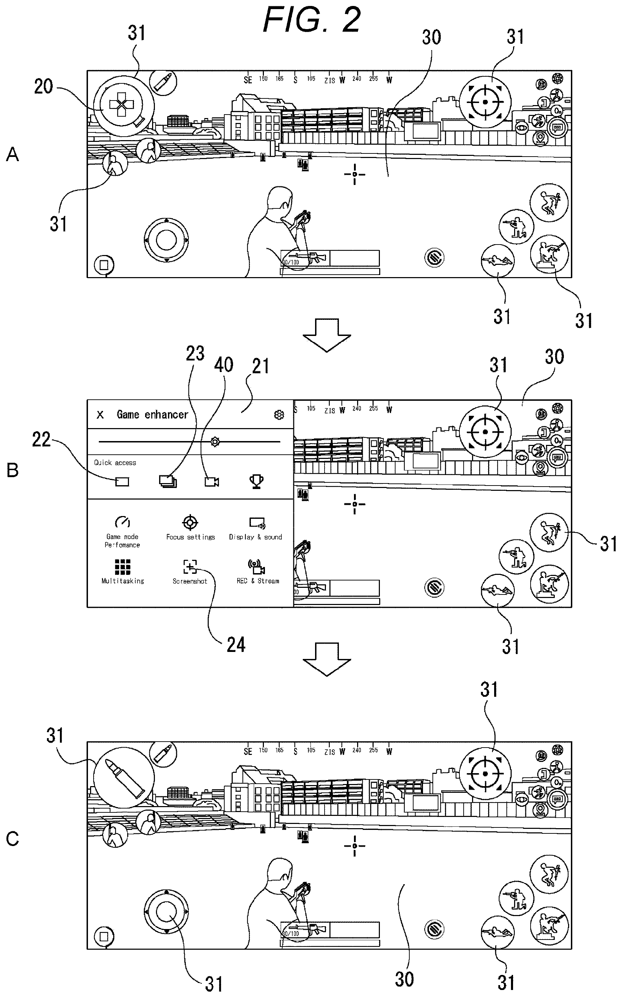

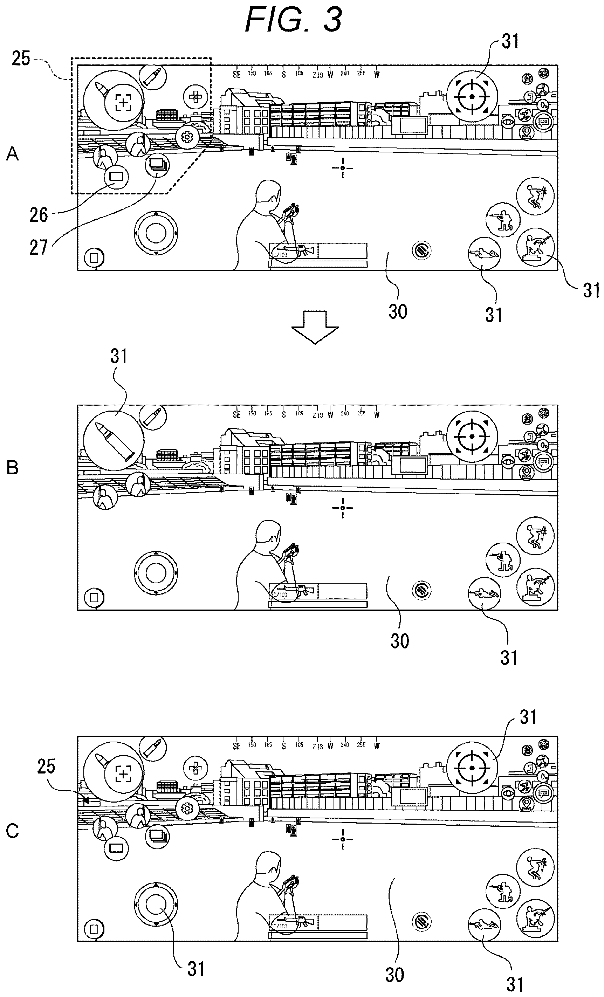

Fig. 2A illustrates a state in which the sensor unit 140 has detected that the user has turned the information processing apparatus 10 horizontally, and the control unit 190 has displayed a screen on the display unit 150 as a horizontal screen. In addition, although a smartphone is taken as an example of the information processing apparatus 10, the housing and the display unit 150 are not illustrated and only display content of the display unit 150 is illustrated in Figs. 2A, 2B, 2C, 3A, 3B, and 3C.

Fig. 2A illustrates a state in which the control unit 190 has already activated a first application (for example, a game application) and has caused the display unit 150 to display a game screen 30 based on the first application all over the screen. The game screen 30 includes various game icons 31 displayed as game content.

Fig. 2A illustrates a state in which the user is playing the first application but is not using the extension application.

The extension application may be activated by the control unit 190 upon detection of activation of the first application, or may be activated upon detection of an arbitrary operation during activation of the first application. The arbitrary operation is, for example, a user operation detected by the operation unit 110 or the sensor unit 140, a voice operation recognized by the audio input unit 160, or the like.

In addition, the extension application may be automatically activated together with activation of the OS of the information processing apparatus 10. Alternatively, the extension application may be activated by pressing an icon for the extension application displayed on the display unit 150 by a user operation or the like.

For example, in Fig. 2A, an extended function icon 20 is displayed on the game screen 30.

For example, when the extended function icon 20 is touched, the extended function menu 21 is displayed as illustrated in Fig. 2B. The user can operate each of items included in the extended function menu 21.

In the extended function menu 21, various icons including, for example, a single screenshot (SS) icon 22, a burst SS icon 23, an SS display icon 24, and a record icon 40 are displayed. Note that the record icon 40 is an icon for an operation for storing a moving image. An example of processing related to use of the record icon 40 will be described later.

The single SS icon 22 is an icon for an operation for capturing one screenshot. The burst SS icon 23 is an icon for an operation for capturing a plurality of screenshots.

When the single SS icon 22 or the burst SS icon 23 is used, one or a plurality of screenshot is captured in a state where the extended function menu 21 is hidden as illustrated in Fig. 2C.

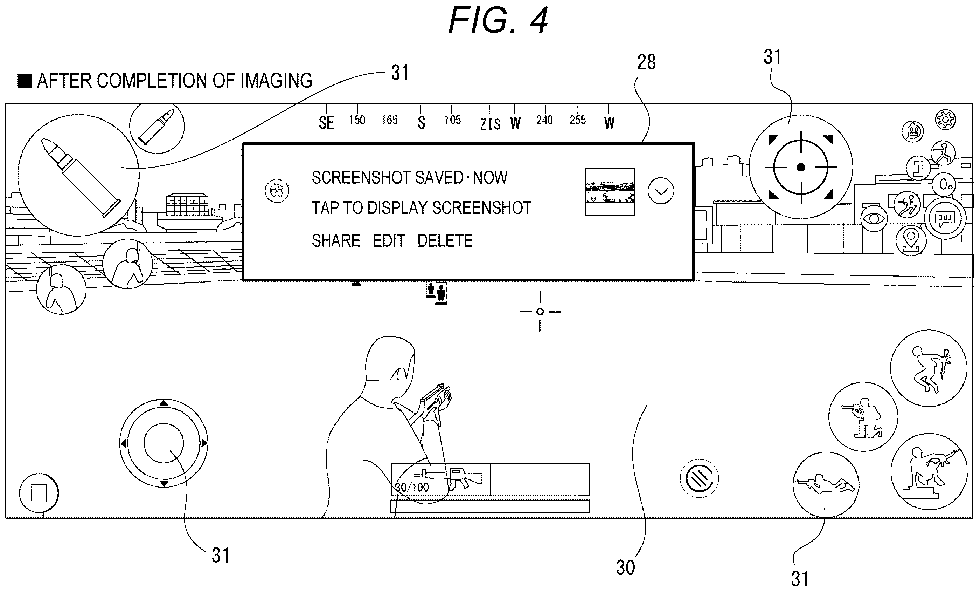

Thereafter, when processing for storing a still image as a screenshot is completed, a notification dialog 28 is displayed as illustrated in Fig. 4.

In the notification dialog 28, for example, a message or the like indicating that the screenshot has been saved is displayed.

The notification dialog 28 is automatically hidden after a certain period of time. Alternatively, the user can hide the notification dialog by performing a swipe operation on the notification dialog 28.

The SS display icon 24 in the extended function menu 21 in Fig. 2B is an icon for displaying an SS standby menu 25. When the SS display icon 24 is used, the SS standby menu 25 is displayed and superimposed on the game screen 30 as illustrated in Fig. 3A. The SS standby menu 25 includes, for example, a single SS icon 26, a burst SS icon 27, and the like as icons related to screenshots.

The SS standby menu 25 is not a menu that temporarily appears on the game screen 30 like the extended function menu 21, but a menu that regularly arranges icons on the game screen 30.

When the user uses the single SS icon 26 or the burst SS icon 27, one or a plurality of screenshots is captured in a state where the SS standby menu 25 is temporarily hidden as illustrated in Fig. 3B. When processing for saving an image then ends, the SS standby menu 25 is displayed again as illustrated in Fig. 3C.

Note that, in a process from Fig. 3B to Fig. 3C, the notification dialog 28 in Fig. 4 is displayed.

As described above, for example, an image of the first application such as a game application can be saved as a screenshot on the basis of the extension application.

The screenshot operation based on the extended function, however, has a disadvantage in operability as follows.

First, in a case where the single SS icon 22 or the burst SS icon 23 in Fig. 2B is used, two steps of UI operation need to be performed before imaging. That is, it is necessary to use the single SS icon 22 or the burst SS icon 23 after displaying the extended function menu 21 by using the extended function icon 20. Such two-step operation requires interrupting gameplay and is laborious.

In addition, if the SS standby menu 25 in Fig. 3A is displayed, it is possible to capture a screenshot with one touch during a game. The icons of the SS standby menu 25, however, are always displayed on the game screen 30, which may interfere with game play. In addition, there is a possibility that confusion with game icons 31, which are an UI of the game, or an erroneous operation occurs.

Furthermore, in any of the above cases, it takes time from a moment when the user desires to image to an actual start of imaging. For this reason, there is a possibility that a scene that changes in units of milliseconds cannot be imaged in a timely manner.

Furthermore, a next imaging operation cannot be performed until completion of the processing for saving a screenshot. That is, the next imaging operation cannot be performed until the single SS icons 22 and 26 and the burst SS icons 23 and 27 are displayed. For this reason, there is a case where continuous capture cannot be performed and a desired moment is missed.

Furthermore, as a notification after completion of imaging, the notification dialog 28 illustrated in Fig. 4 is displayed for each imaging operation. If the notification dialog 28 is not manually removed or unless the user waits until the notification dialog 28 disappears after a lapse of time, the notification dialog 28 will appear in a next screenshot.

Next, a screenshot operation normally included in a smartphone will be described. Depending on a model of a smartphone, for example, pressing two hardware keys at the same time may be the screenshot operation.

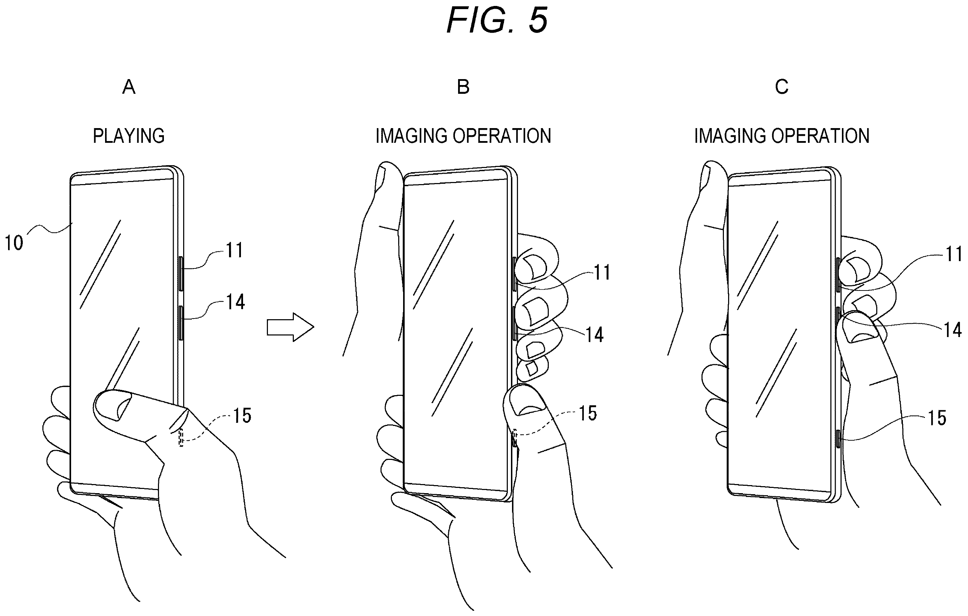

Fig. 5A illustrates a situation in which the user is holding the information processing apparatus 10 (smartphone) vertically and playing a game or the like.

The housing of the information processing apparatus 10 includes a volume key 11, a power key 14, and a camera key 15 as hardware keys. The volume key 11 is a control for increasing or decreasing output volume. The power key 14 is a control that activates the information processing apparatus 10. A camera key 15 is a control for a shutter operation or the like when the information processing apparatus 10 performs imaging.

For example, simultaneous pressing of the volume key 11 and the power key 14 is a screenshot operation.

In the state of Fig. 5A, the user is playing the game while performing touch operations on the screen with the thumb of the right hand.

In a case where the user desires to take a screenshot in this state, the user moves the fingers of the left hand toward a right side of the smartphone as illustrated in Fig. 5B to simultaneously press the volume key 11 and the power key 14.

Alternatively, as illustrated in Fig. 5C, the user simultaneously presses the volume key 11 and the power key 14 using both the right hand and the left hand.

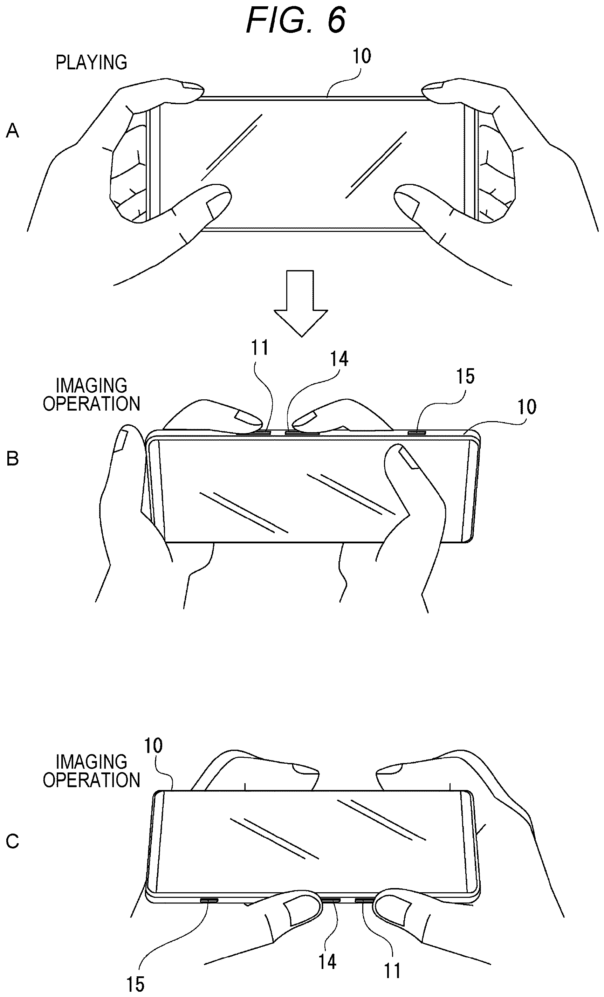

Fig. 6A illustrates a situation in which the user is holding the information processing apparatus 10 horizontally and playing a game or the like.

In a case where the user desires to take a screenshot, the user moves the fingers of the left and right hands from behind the smartphone as illustrated in Fig. 6B to simultaneously press the volume key 11 and the power key 14.

Alternatively, as illustrated in Fig. 6C, the user horizontally rotates the smartphone and simultaneously presses the volume key 11 and the power key 14 using both the right hand and the left hand.

In both the case of the vertical holding and the case of the horizontal holding described above, it is necessary to change how to hold the smartphone from the state of the game play, which adversely affects operability and interrupts the game play to some extent.

In particular, if the two keys are not simultaneously pressed correctly, a volume adjustment UI (displayed by pressing the volume key 11) and a power supply menu (displayed by pressing the power key 14) are displayed. Therefore, if the volume adjustment UI and the power supply menu are not hidden, they will appear in a next screenshot. In addition, some UIs including the volume adjustment UI are not cancelable, that is, it is necessary to refrain from taking a next screenshot until the UIs disappear.

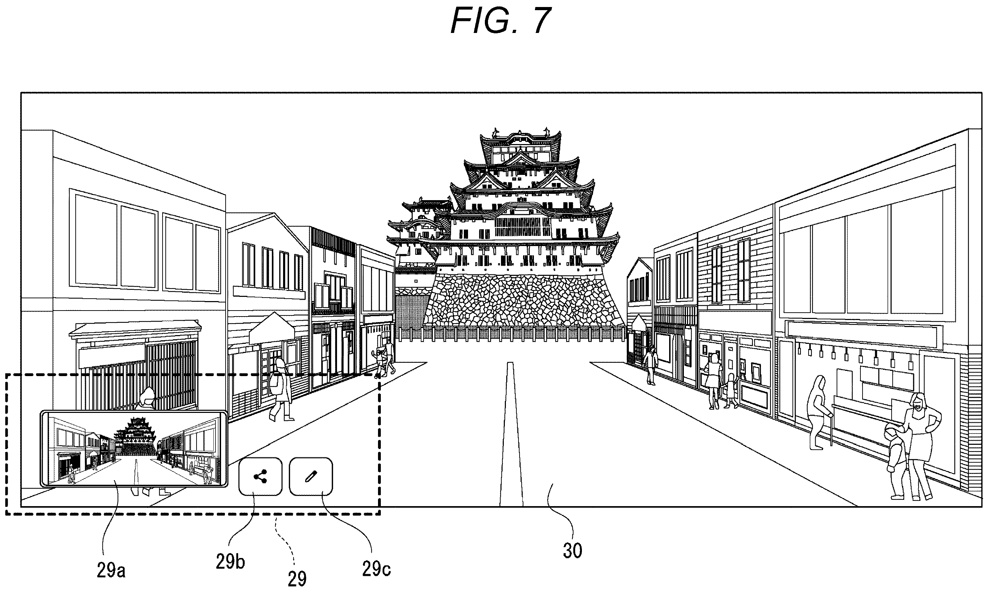

In addition, Fig. 7 illustrates a notification dialog 29 displayed after capture of a screenshot. In the notification dialog 29, a preview image 29a of a stored still image, an icon 29b for sharing, and an icon 29c for editing are displayed.

Since the notification dialog 29 is also displayed for each capture operation of a screenshot, the notification dialog 29 will appear in the next screenshot unless the display is manually removed or the display disappears after a lapse of time.

Note that the screenshot as the standard function as described above is assumed to be mainly used for capturing a still screen, and is assumed to be able to be confirmed immediately after the capture or to edit or share the captured image immediately.

Therefore, even though the operability of pressing two hardware keys is low, it does not become a big problem unless capture of a game screen during game play is considered. In addition, it is actually useful that a preview image of a still image and icons of sharing and editing are displayed on the notification dialog 29.

Screenshots in the extended function menu 21, on the other hand, are assumed to capture screens during games.

Therefore, it is required not to miss a moment on a screen that is always moving, to be able to return to the game immediately after the capture, not to interfere with the game play, and the like.

### <3. Screen Shot as Additional Function>

The present embodiment provides an additional function that enables more comfortable execution of a screenshot operation, particularly during game play.

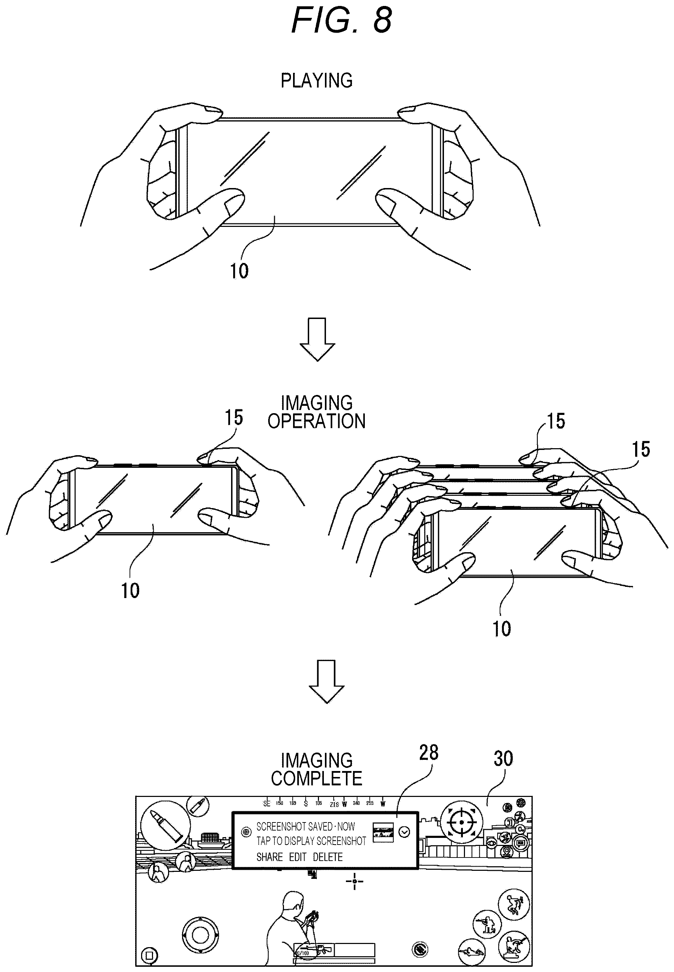

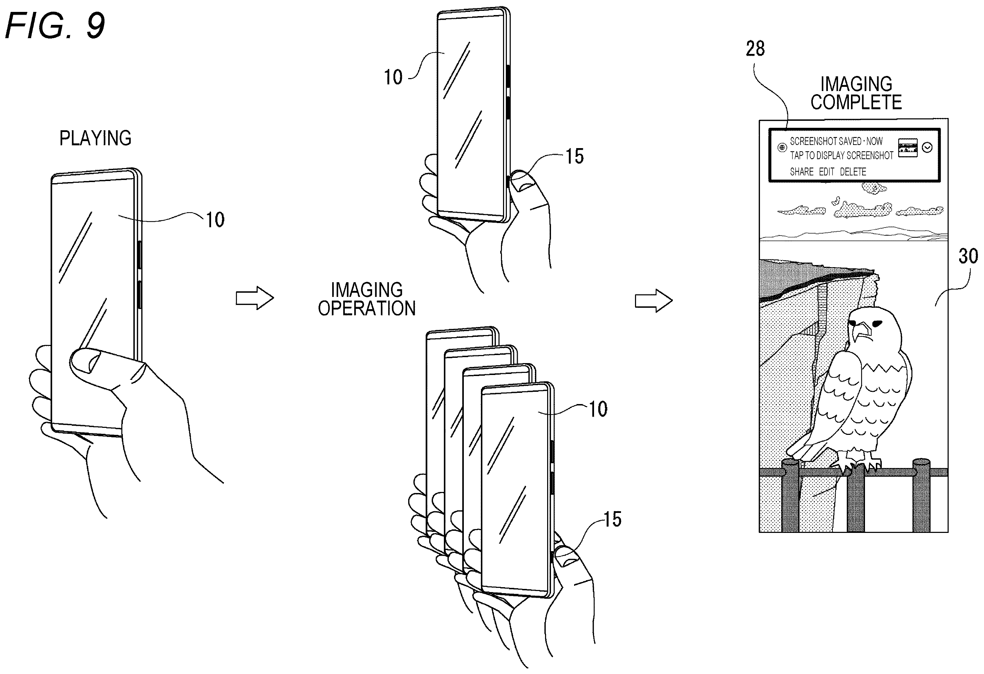

Figs. 8 and 9 illustrate screenshot operations by the user by the additional function while taking game play as an example.

In this additional function, the screenshot operation is use of one hardware key. The hardware keys include the volume key 11, the power key 14, and the camera key 15 described above, and as an example, the camera key 15 is assigned as a screenshot control. Note that it is sufficient that the camera key 15 is assigned as a screenshot control while the additional function in the present embodiment is activated. In addition, the user may be allowed to select a setting in which another hardware key is assigned as the screenshot control.

An upper part of Fig. 8 illustrates a situation in which the user is holding the information processing apparatus 10 horizontally and playing a game. When a scene that the user desires to capture occurs during the game play, for example, the user presses the camera key 15 once with the index finger of the right hand or the like as illustrated in a middle part of Fig. 8. Alternatively, the user may continuously press the camera key 15 a plurality of times.

A left part of Fig. 9 illustrates a situation in which the user is holding the information processing apparatus 10 vertically and playing a game. When a scene that the user desires to capture occurs during the game play, for example, the user presses the camera key 15 once with the thumb of the right hand or the like as illustrated in a middle part of Fig. 9. Alternatively, the user may continuously press the camera key 15 a plurality of times.

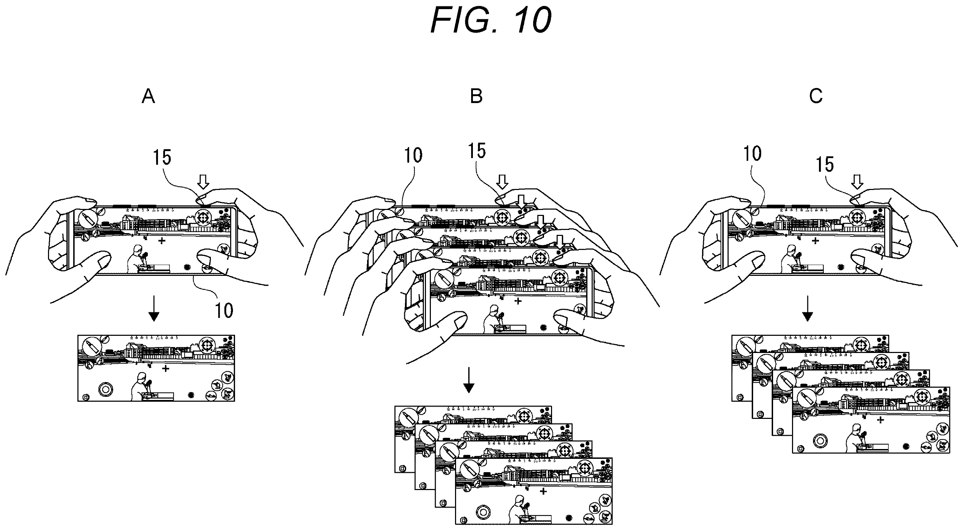

Note that, as an operation using the hardware keys including the camera key 15, for example, operation modes illustrated in Figs. 10A, 10B, and 10C can be considered.

Fig. 10A illustrates single capture in which one press captures one still image.

Fig. 10B illustrates continuous capture performed by the user repeating single capture in a short period of time. That is, the information processing apparatus 10 performs processing of single capture in response to one press, but still images are stored as continuous capture since the user repeats the operation.

Fig. 10C illustrates so-called burst capture in which a plurality of images is automatically captured by, for example, pressing and holding the camera key 15 or the like.

In the additional function, for example, such screenshot capture can be performed.

The middle parts of Figs. 8 and 9 exemplify single capture and continuous capture among the above. In either case, the capture of the screenshot(s) is completed only by the use of the camera key 15.

Since a position of the camera key 15 in the examples in the drawings is a position where a finger can naturally reach during the game play, it is possible to smoothly transition to the capture operation during the play. In addition, depending on how to hold, it is also possible to perform the capture operation while continuing the game play. Furthermore, the capture operation can be reliably performed by one push operation.

Furthermore, since a software switch is not used, it is not necessary to display an icon or the like for a screenshot on the game screen 30, and it does not interfere with the game screen.

Note that, since users have various ways of holding a smartphone during game play, it is preferable that the user can select to which hardware key the screenshot control is assigned in accordance with the way of holding thereof.

Moreover, the additional function has a feature of notification about the screenshot, that is, display of the notification dialog 28 after completion of capture illustrated in a lower part of Fig. 8 and a right part of Fig. 9.

Whereas the middle parts of Figs. 8 and 9 illustrate the case of one operation and the case of a plurality of operations of the camera key 15, in the case of a plurality of operations, the notification dialog 28 illustrated in the lower part of Fig. 8 and the right part of Fig. 9 is not displayed every time but displayed after one group of operations is determined and it is determined that the group of operations has been completed.

That is, in a case where the user continuously performs the operation a plurality of times, the notification dialog 28 is not displayed for each operation. As a result, even if the user continuously uses the camera key 15 in a short period of time, the notification dialog 28 does not appear in screenshot images.

The information processing apparatus 10 determines one cycle as a group as one operation or a continuous series of operations, regards the one cycle as a group operation, and displays the notification dialog 28 in response to an end of the group operation.

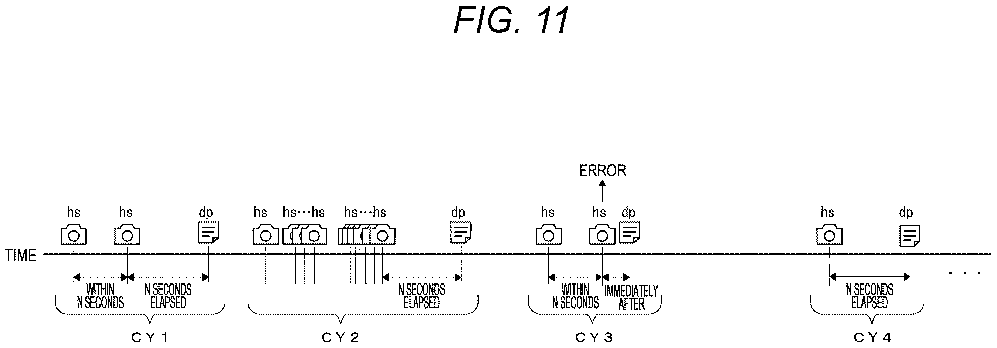

The determination of one cycle as a group operation will be described with reference to Fig. 11.

As an example of the determination of one cycle, a threshold time of N seconds is used here.

The information processing apparatus 10 determines that one cycle has not yet ended until a threshold time elapses from a latest screenshot operation, and does not display the notification dialog 28 during the period. After determining that one cycle has ended, the information processing apparatus 10 then collectively displays the number of captured images, the number of errors, and details of the errors in one notification dialog 28.

In Fig. 11, a horizontal direction is illustrated as a time axis. Each of operations hs is a screenshot operation by single pressing of the camera key 15 described above. Display dp indicates the display of the notification dialog 28.

A cycle CY1 indicates a case where a second operation hs is performed within N seconds after a first operation hs. In this case, the second operation hs is an operation before an end of one cycle. When N seconds elapse without any operation performed after the second operation hs, the information processing apparatus 10 determines that the group operation as one cycle has ended, and performs the display dp of the notification dialog 28.

In a cycle CY2, a plurality of operations hs including a second and later operations is performed within N seconds after a first operation hs. Furthermore, after the continuous capture is temporarily finished, a plurality of operations hs is continuously performed again within N seconds. Thereafter, when N seconds elapse without any operation performed, the information processing apparatus 10 determines that a group operation as one cycle has ended, and performs the display dp of the notification dialog 28.

A cycle CY3 indicates a case where a second operation hs is performed within N seconds after a first operation hs. It is assumed, however, that a problem that imaging cannot be continued occurs and an error occurs at a time of the second operation hs. For example, a still image of a screenshot cannot be stored due to a storage capacity or the like.

In such a case, the information processing apparatus 10 immediately determines that the cycle has ended, and performs the display dp of the notification dialog 28.

In a cycle CY4, it is assumed that N seconds have elapsed without an operation being performed after a first operation hs. In this case, the information processing apparatus 10 determines that a group operation as one cycle has ended with only one operation hs, and performs the display dp of the notification dialog 28.

One cycle is thus determined using the threshold time (N seconds) for one or a plurality of operations, and the notification dialog 28 is displayed for the one cycle.

As a result, in a case where continuous capture is performed, the notification dialog 28 is not displayed for each image.

An example of display content in a case where the notification dialog 28 is displayed in units of group operations will be described.

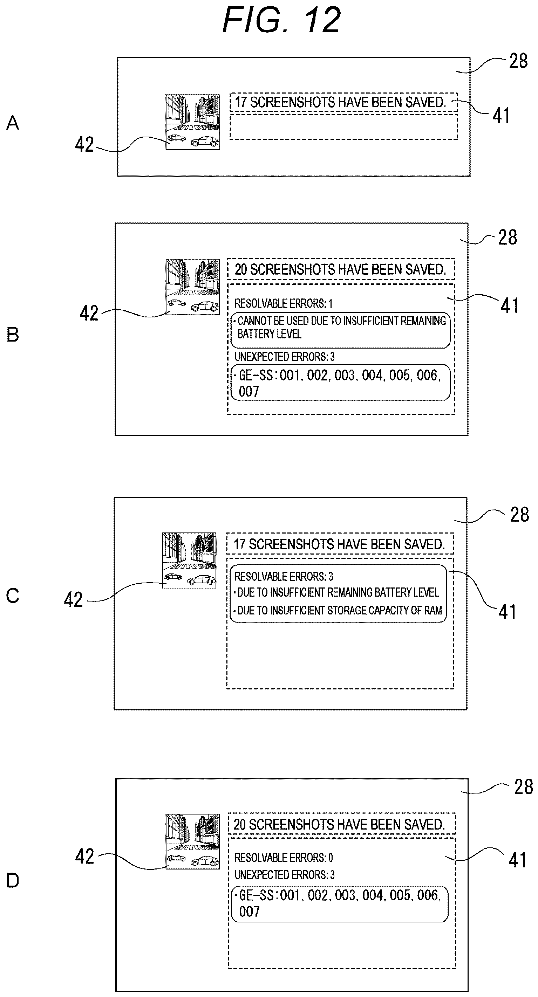

Fig. 12A is a display example in a case where all of a plurality of screenshot images has been successfully shot in one cycle. For example, a thumbnail 42 of a first successful image in the cycle is displayed, and "17 screenshots have been saved" or the like is displayed as a text message 41.

Fig. 12B is a display example in a case where both an error that can be resolved and an unexpected error are included. For example, a thumbnail 42 of a first successful image in one cycle is displayed, and "20 screenshots have been saved" or the like is displayed as a text message 41. In addition, the text message 41 displays the number and details of errors that can be resolved and the number and details of unexpected errors.

The details of the errors are displayed as messages, error codes, or the like.

Examples of the error that can be resolved include an insufficient remaining battery level, an upper limit of the number of folders being reached, an insufficient storage capacity of an attached storage medium or an internal memory, an upper limit of the number of images that can be continuously captured, and a high-temperature state.

In a case where a plurality of errors that can be resolved has occurred, all of details thereof may be displayed, or a subset of the details may be displayed. For example, the details of the errors described above may be ranked and only a subset thereof may be displayed.

Fig. 12C is a display example in a case where there is an error that can be resolved and there is no unexpected error. Together with a thumbnail 42 of a successful screenshot image, capture results and details of errors that can be resolved are displayed as the text message 41.

Fig. 12D is a display example in a case where there is no error that can be resolved and there is an unexpected error. Together with a thumbnail 42 of a successful screenshot image, capture results and details of unexpected errors are displayed as the text message 41.

Although not illustrated, in a case where capture of every screenshot has failed, for example, a thumbnail 42 is not displayed, and details of the errors are displayed as the text message 41.

As in the above example, after one cycle of capture, a representative thumbnail 42, the number of images that have been successfully saved, and a text message 41 indicating details of errors are displayed for one or a plurality of screenshots captured, so that a collective notification for one cycle is performed.

Note that there are a case where one screenshot is captured as one cycle and a case where a plurality of screenshots is captured as one cycle, and display content is different depending on the case.

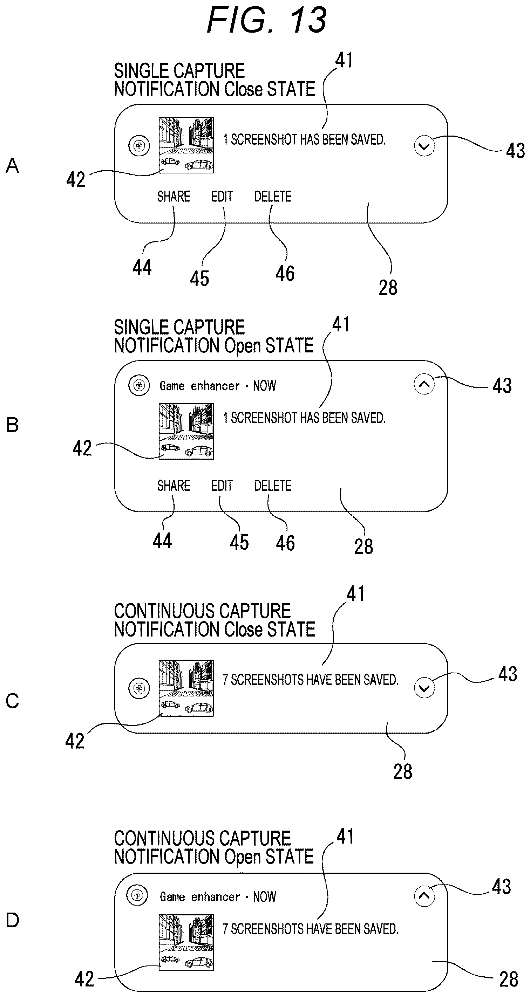

Figs. 13A and 13B illustrate a case where one screen shot has been captured. A closed state and an open state of a notification are illustrated.

Figs. 13C and 13D illustrate a closed state and an open state of a notification in a case where a plurality of screenshots has been captured.

Note that these are examples of a case where there is no error.

In addition, the closed state and the open state are switched by using an open/close button 43.

In a case where one image is captured in one cycle, a share button 44, an edit button 45, and a delete button 46 are displayed.

The share button 44 is a button for transitioning to a screen for sharing a screenshot image. The edit button 45 is a button for transitioning to a screen for editing a screenshot image. The delete button 46 is a button for deleting a screenshot image.

These are operation icons for post-processing on captured screenshot images.

On the other hand, in a case where a plurality of images is captured in one cycle, the operation icons for post-processing, such as the share button 44, the edit button 45, and the delete button 46 are not displayed.

In a case where the number of images captured is one, an image to be processed can be specified, so that it is easy to transition to the post-processing. On the other hand, in a case where the number of images captured is two or more, it is necessary to begin with the specification of the image to be processed, and it is assumed that the user usually does not stop playing the game and proceed to the post-processing. Therefore, the operation icons for the post-processing are not displayed.

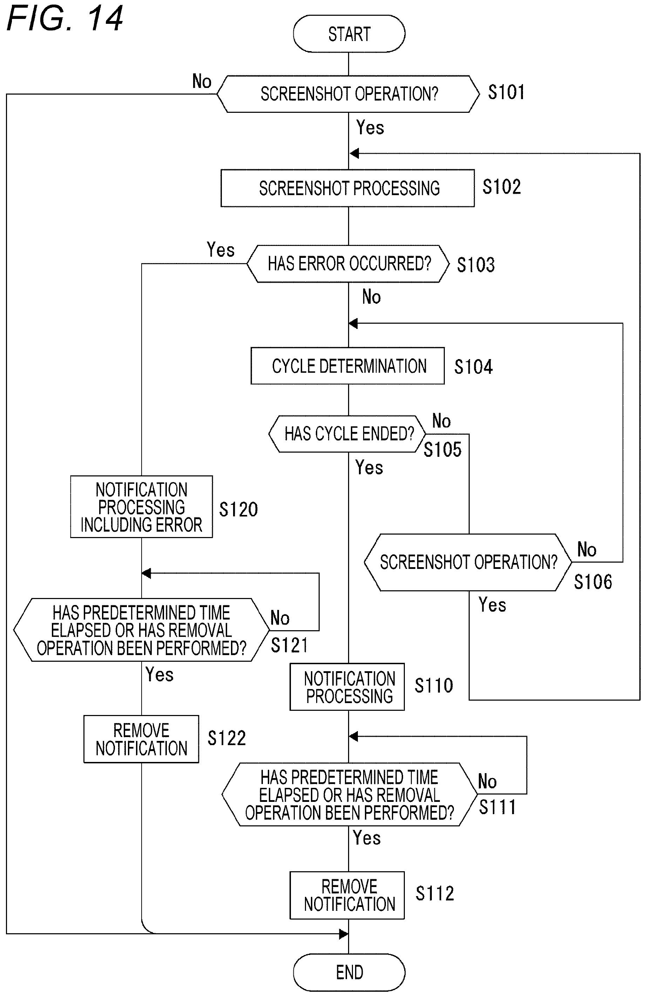

As described above, the information processing apparatus 10 performs, as the additional function for capturing a screenshot, processing for capturing a screenshot by using the camera key 15, for example, while activating a game application. An example of a process performed by the control unit 190 for the additional function will be described with reference to Fig. 14. Fig. 14 illustrates an example of a process performed by the control unit 190 at a time when a program as the additional function has been activated.

In step S101, the control unit 190 monitors a screenshot operation. The operation in this case refers to use of a hardware key assigned as a screenshot control. For example, the camera key 15 is used.

In a case where the screenshot operation, that is, use of the camera key 15, for example, is detected, the control unit 190 proceeds to step S102 and performs screenshot processing. Specifically, a process for capturing an image on the display screen at this time and storing the captured image as a still image in the storage medium or the internal memory of the storage unit 120 is performed.

Note that, at this time, the control unit 190 also stores history information regarding the screenshot operation. This is for use in update of the threshold time described later and the like. For example, an operation date and time (year, month, day, hour, minute, and second) of the screenshot operation, identification information regarding a game title being played, and the like are stored.

In step S103, the control unit 190 branches the process depending on whether or not an error has occurred in the screenshot processing.

If no error has occurred, the control unit 190 performs a cycle determination in step S104. For example, it is determined whether or not N seconds have elapsed from a latest screenshot operation.

If N seconds have not elapsed, the control unit 190 determines that the cycle has not ended, proceeds from step S105 to step S106, and detects presence or absence of the screenshot operation (for example, use of the camera key 15) as in step S101.

If there is no screenshot operation, the control unit 190 returns to step S104 and continues the cycle determination. That is, the control unit 190 waits for N seconds as the threshold time in a loop of steps S104, S105, and S106.

If N seconds have elapsed without the next screenshot operation after the first screenshot operation, the control unit 190 determines that the cycle has ended, and proceeds to step S110 to perform notification processing. In this case, the notification dialog 28 is displayed for capture of one screenshot. This corresponds to a case indicated by the cycle CY4 in Fig. 11.

Thereafter, in step S111, the control unit 190 monitors elapse of a predetermined display time or a display removal operation by the user. If the display time has elapsed or the user confirms the removal operation by, for example, swiping the notification dialog 28, the control unit 190 proceeds to step S112 and removes the notification dialog 28 from the screen. The process of Fig. 14 corresponding to one cycle is then terminated.

Note that in a case where the user performs the removal operation, the control unit 190 may include information indicating that the removal operation has been performed in history information regarding a group operation in the current cycle.

If the screenshot operation is detected in step S106 before the cycle ends, the control unit 190 proceeds to step S102, and performs screenshot processing corresponding to the operation. If there is no error, the process then enters the loop of steps S104, S105, and S106 again.

This is a case where capture of a plurality of screenshots is performed within one cycle as indicated by the cycles CY1 and CY2 in Fig. 11.

If, at a certain time point, N seconds have elapsed after the latest screenshot operation, the control unit 190 determines that the cycle has ended, and proceeds to step S110 to perform the notification processing. In this case, the notification dialog 28 is displayed for capture of a plurality of screenshots. Thereafter, the control unit 190 ends the process of Fig. 14 corresponding to one cycle through steps S111 and S112.

If it is determined in step S103 that an error has occurred in the cycle, the control unit 190 proceeds to step S120 and displays the notification dialog 28 including details of the error as the notification processing. That is, the cycle determination in step S104 is not performed, and the cycle is immediately terminated in accordance with the occurrence of the error.

In step S121, the control unit 190 then monitors the elapse of the predetermined display time or the display removal operation by the user. If the display time has elapsed or the user confirms the removal operation by, for example, swiping the notification dialog 28, the control unit 190 proceeds to step S122, removes the notification dialog 28 from the screen, and ends the process of Fig. 14.

This corresponds to a case indicated by the cycle CY3 in Fig. 11.

By the processing of Fig. 14 described above, the notification dialog 28 is displayed in accordance with the cycle determination as a grouping operation.

Next, N seconds as the threshold time for the determination of one cycle will be described.

As N seconds, for example, a fixed value such as 1 second may be used. For example, N seconds are defined as 1 second or the like from a distribution tendency of a time interval between a capture operation and another capture operation at a time when a user test for continuous capture is performed.

Furthermore, it is also conceivable to automatically optimize N seconds in accordance with the behavior of each user.

Therefore, the control unit 190 performs learning of capture intervals at a time of continuous capture.

First, a default threshold time for a user who has not used the screenshot function is optimized.

For example, it is conceivable that an optimum value of N seconds is different for each game title. Therefore, a server device collects distribution data regarding the number of images captured for each game title, and determines the default threshold time (N seconds) for each game title or for each genre.

The server device is, for example, a server device with which the information processing apparatus 10 communicates when starting a game application.

The server device collects history information regarding screenshot operations from a large number of information processing apparatuses 10.

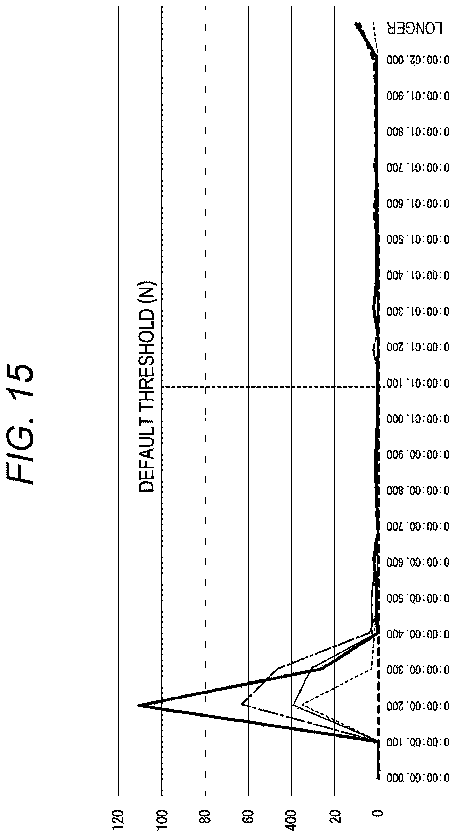

Fig. 15 illustrates distributions related to a certain game title with a vertical axis representing the number of times and a horizontal axis representing time (time between a certain operation and a next operation). Different lines indicate distributions of operations by different users.

For example, in this example, it can be seen that intervals between operations peak at 0.2 seconds and are distributed from 0.1 seconds to 0.4 seconds. Therefore, N = 1.1 seconds is set as an initial value covering this.

Since the server device sets the default N value on the basis of distributions in this manner, the information processing apparatus 10 obtains the threshold time (N value) from the server device at a time of network connection during action of a game application, and uses the threshold time in step S104 in Fig. 14.

Next, for a user who has performed a plurality of screenshot operations, the information processing apparatus 10 may optimize the N value in accordance with the user.

For example, from a distribution tendency of time intervals of screenshot operations, a time when the distribution declines after reaching a peak is set as the N value.

Specifically, for example, if there is a time interval at which the number of operations is zero (a time interval at which the number of operations becomes zero and remains zero to some extent at subsequent time intervals) after the peak, the time is used as N seconds.

In addition, if there is no time interval at which the number of operations is zero, the time interval at which the number of operations is the smallest is used as N seconds.

Note that a maximum time of N seconds is also defined. The maximum time may be fixed or may be defined by the user.

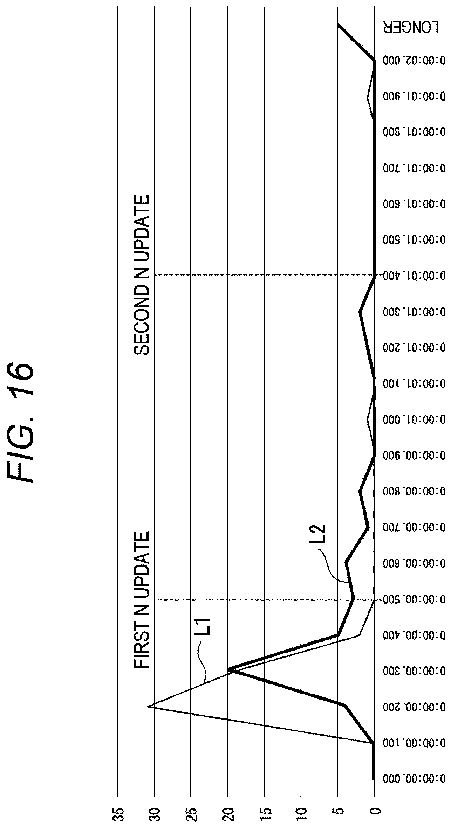

Fig. 16 illustrates an example of optimization according to such a user operation. The control unit 190 of the information processing apparatus 10 collects history information regarding the user who uses the information processing apparatus 10, for example, in a state where N seconds as the initial value is set. For example, the history information is history information stored at the time of the screenshot processing in step S102 in Fig. 14.

Distribution data as indicated by a thin line L1 in Fig. 16 is generated and analyzed on the basis of the history information. It is assumed in this case that a distribution indicated by a solid line is obtained. In this distribution, the number of operations is zero at a time interval of 0.5 seconds, and the number of operations remains zero thereafter. Therefore, the N value is set (updated) to 0.5 seconds.

It is assumed that when the control unit 190 generates distribution information at a later time point, the distribution information is as indicated by a thick line L2 in Fig. 16. In this case, the number of operations is observed up to about 1.3 seconds, and remains zero to some extent after 1.4 seconds. Therefore, the N value is set (updated) to 1.4 seconds.

The control unit 190 sequentially updates the N value in accordance with actual use by the user, and the cycle determination as the grouping operation for the user can be optimized.

Note that the N value may be updated by analyzing a tendency for each game title. This is because even the same user changes the play style and a scene to be captured if the game title is different.

In addition, it is preferable to review the N value also in a case where there is history information indicating that the user has performed a screenshot operation within N seconds after swiping off the notification dialog 28.

For example, a value obtained by adding a time from the display of the notification dialog 28 to the next screenshot operation to N seconds at this time is set as new N seconds.

Furthermore, in a case where the user repeats the screenshot operation M times or more after updating N seconds and the N value significantly decreases due to learning of the distribution of the number of images captured, the N value may be used as a new threshold time.

Note that the update by learning the N value is preferably executed by selecting a time of the day at which a load of the control unit 190 (CPU) is low inside the information processing apparatus 10.

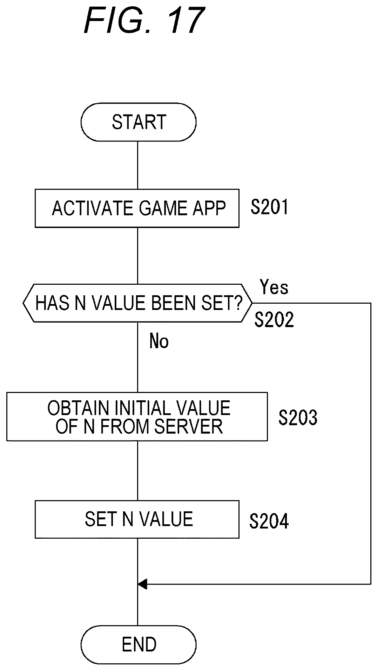

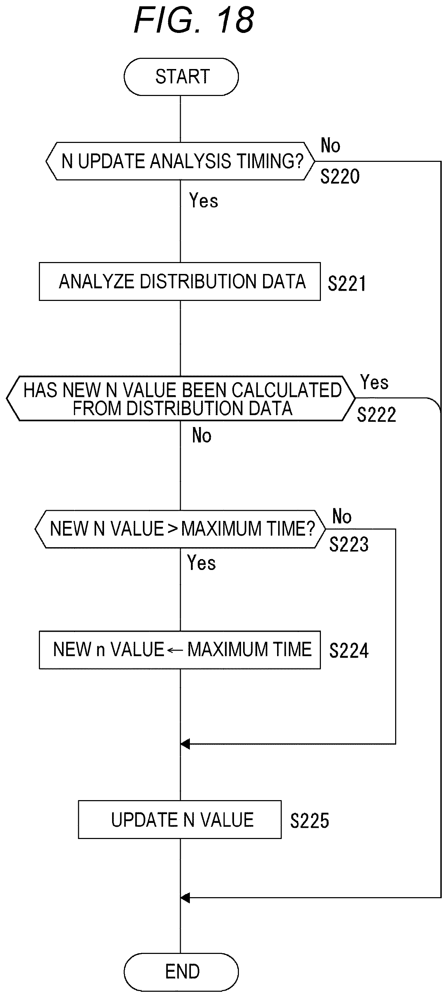

Examples of processing performed by the control unit 190 in relation to the above-described setting of the N value will be described with reference to Figs. 17 and 18.

Fig. 17 is an example of a process related to the setting of the initial value.

In step S201, the control unit 190 starts a game app in accordance with a user operation.

In step S202, the control unit 190 determines whether or not the N value has been set for the started game app. If so, the process of Fig. 17 is terminated without particularly performing the processing related to the N value.

If the N value has not been set for the game, the control unit 190 proceeds to step S203, and requests an initial value of the N value from the server device. The N value transmitted from the server device is then obtained.

In step S204, the control unit 190 sets the obtained N value as the threshold time.

Thereafter, the control unit 190 performs the process of Fig. 14, and at this time, the set N value is used in the cycle determination in step S104.

Fig. 18 illustrates a process for updating the N value.

In step S220, the control unit 190 determines whether or not it is a timing of update analysis of the N value.

For example, the control unit 190 learns times of the day at which the information processing apparatus 10 is used, and determines, for example, times of the day at which the information processing apparatus 10 is not often used and the processing load of the control unit 190 is low. Therefore, sleep time and the like in the user's life cycle are applicable.

In step S220, the control unit 190 checks whether or not such a time of the day has come.

Furthermore, the control unit 190 checks the progress from previous setting or update of the N value. For example, it is checked whether the number of screenshot operations after the previous setting or update has reached a predetermined value or more, or whether a predetermined number of days has elapsed. If so, it is determined that it is the timing of update of the N value.

In addition, in a case where the number of times that the user has swiped off the notification dialog 28 is equal to or more than a predetermined value, it may be determined that the timing of update has come.

If it is determined that the timing of the analysis for update has come in accordance with these conditions, the control unit 190 proceeds to step S221, and generates and analyzes the distribution data as illustrated in Fig. 16 on the basis of the history information.

In step S222, the control unit 190 then checks whether or not a new N value different from the current value has been calculated from the distribution data.

If the N value obtained from the analysis data is the same number of seconds as the current N value, it is not necessary to update the setting, and the process of Fig. 18 is terminated.

If the N value obtained from the analysis data is a new number of seconds different from the current N value, the control unit 190 proceeds to step S223, and compares the new N value with a preset maximum time. The maximum time is an upper limit value of the N value.

If the new N value > the maximum time is not satisfied, the control unit 190 proceeds to step S225, and performs update such that the number of seconds as the new N value becomes a newly employed N value.

If the new N value > the maximum time is satisfied, the control unit 190 changes the new N value to the maximum time in step S224 and proceeds to step S225, and performs update such that the number of seconds as the new N value becomes a newly employed N value.

Through the above process, the N value is updated and optimized in accordance with the user's screenshot operation history.

Although an example of update according to the user's screenshot operation history has been described above, there are other examples of an element for determining the necessity of optimizing the N value.

For example, it is conceivable to make a determination from the viewpoint of the camera.

A line of sight of the user is obtained by an in-camera (a camera that captures an image of a scene on a user side) in the imaging unit 130 of the smartphone that is the information processing apparatus 10. The control unit 190 then determines whether the user has moved his/her eyes to look at a position of the notification dialog 28 and whether the user is gazing at the position with respect to a location of the line of sight of the user (specific position on the display) and a time of gazing during the game play.

For example, if the user has not moved his/her eyes to look at the position of the notification dialog 28 after the screenshot operation, it means that the user is not expecting the notification at this timing, and it can be determined that the time is included in one cycle. If the N value has not reached the time, it can be determined that the N value should be updated. Therefore, for example, the N value may be temporarily increased.

In addition, in a case where the user is not gazing, it can be determined that the user is not concentrating on the game. In such a case, the N value may be temporarily reduced.

In addition, instead of displaying the notification dialog 28, it is also conceivable to convey the fact that a screenshot has been taken to the user auditorily, visually, or tactilely without issuing a notification.

### <4. Marking during Moving Image Storage>

Next, as a function of the information processing apparatus 10 according to the embodiment, marking during moving image storage will be described. For example, during a game, recording of a game screen (moving image storage) can be performed by using the record icon 40 in the extended function menu 21 in Fig. 2B.

In the information processing apparatus 10, marking processing can be executed during the recording as a function for storing a still image such as a screenshot.

For example, during the recording, one of the hardware keys is assigned as a control for a marking operation. The control may be any of the volume key 11, the power key 14, and the camera key 15, and may be, for example, the same as or different from the key assigned to the above-described screenshot operation. However, it is desirable to assign the same key as the key assigned to the screenshot operation as a marking operation key at the time of recording.

For example, in a case where the camera key 15 is used as the screenshot control, the camera key 15 is also used as the marking control.

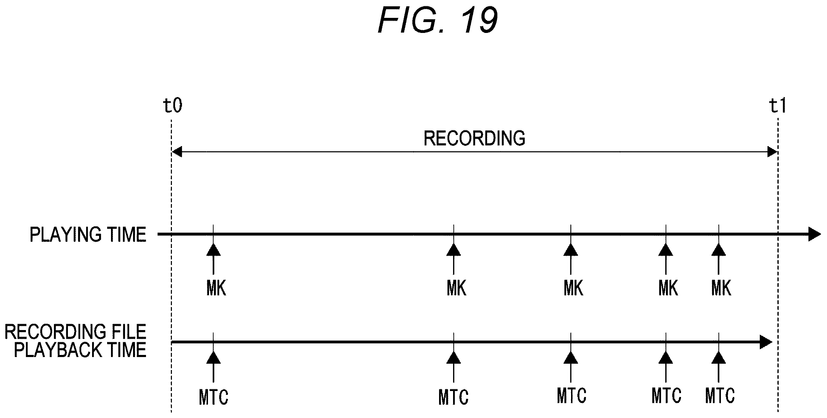

Fig. 19 illustrates that recording of the game screen 30 has been performed between a time point t0 and a time point t1 during the game play.

During this recording (and game play), the user performs a marking operation MK at a timing at which the user desires to store a still image. For example, the camera key 15 is pressed.

As a result, a time stamp MTC as a marking operation position is added to a recording data file. For example, the time stamp MTC is data of time, minute, second, and frame with a recording start time point as a starting point. The drawing illustrates that the marking operation has been performed five times during the recording.

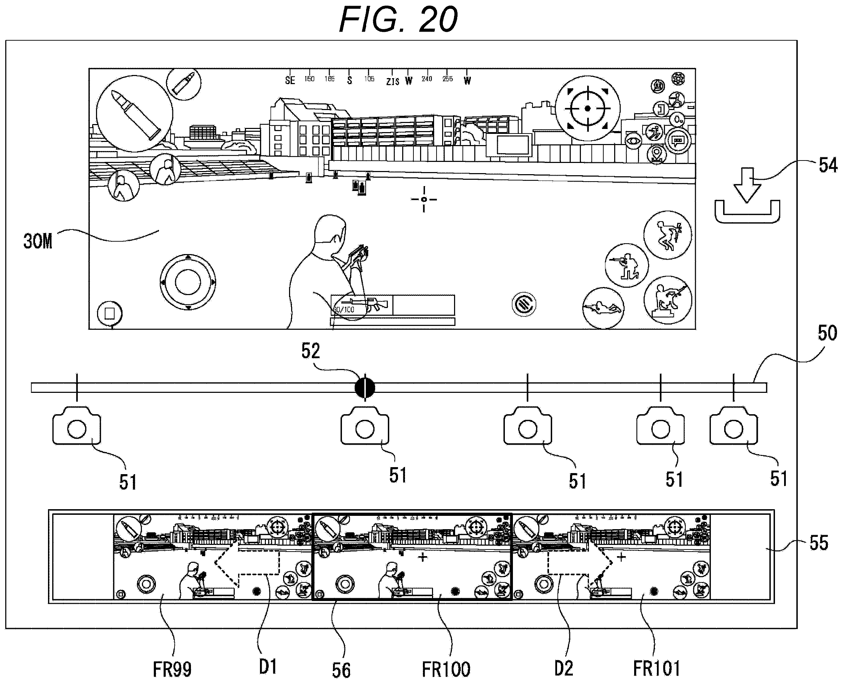

By performing the marking in this manner, the user can store still image data regarding the marking portions using a UI on an editing screen as illustrated in Fig. 20 later. Therefore, the marking operation can be performed like a screenshot during the moving image storage.

On the editing screen of Fig. 20, a playback image 30M of the game screen 30 is displayed, and a sequence bar 50 is also displayed. The sequence bar 50 indicates time length of the recording data file by length of a bar, and indicates a time position of the currently displayed playback image 30M with a pointer 52.

Furthermore, along the sequence bar 50, positions where the marking operations have been performed are displayed as markers 51. Each marker 51 is displayed at a position corresponding to the time stamp MTC stored correspondingly. As a result, the user can know the time position at which the marking operation has been performed in the recording data file.

When the user performs an operation for setting a certain marker 51, a frame bar 55 is displayed. The frame bar 55 displays, for example, a frame of the current time stamp MTC of the set marker 51 at the center and displays preceding and following frames in such a way as to be arranged side by side. A frame image of the current time stamp MTC is indicated in a selection frame 56.

In the example of the drawing, a frame FR100 corresponding to the set marker 51 and preceding and following frames FR99 and RF101 are displayed.

The user can finely adjust the marking position using the frame bar 55. For example, when the user performs a left or right swipe operation (operation in a direction of a dashed arrow D1 or D2) or the like on the frame bar 55, a frame displayed in the selection frame 56 is temporally changed to the preceding or following frame. As a result, the time stamp MTC corresponding to the marker 51 can be adjusted in units of frames.

A storage icon 54 is prepared on the editing screen. When the user uses the storage icon 54, still image data regarding the frame with the time stamp MTC of the currently selected marker 51 is stored.

That is, the user can store still image data regarding a scene by selecting the marker 51, adjusting the time position with the frame bar 55 as necessary, and using the storage icon 54 on the editing screen in Fig. 20.

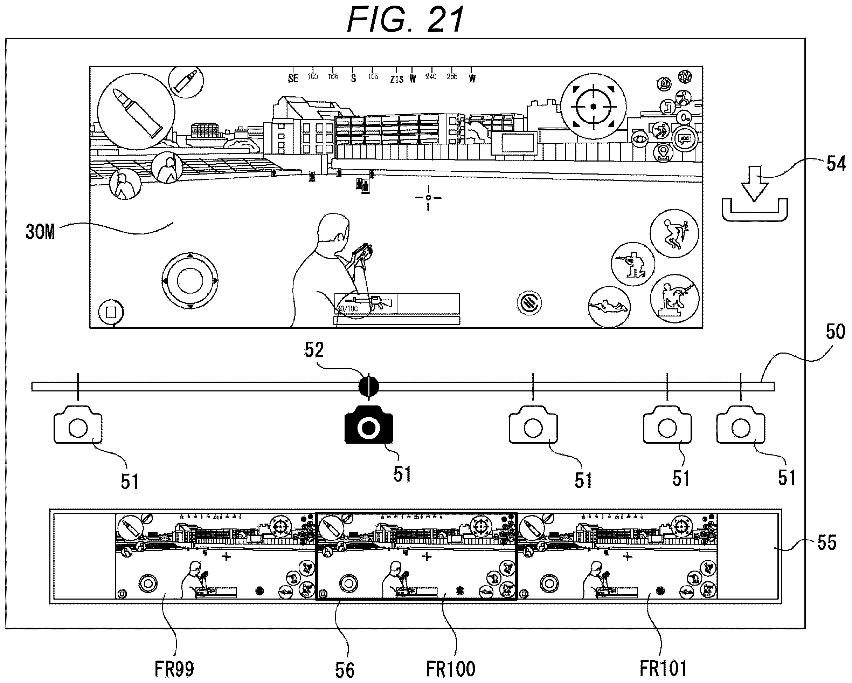

After the still image data is stored for a certain marker 51, the display mode of the marker 51 may be changed as illustrated in Fig. 21. For example, a color of the marker 51 is changed, a design of the marker 51 itself is changed, or the marker is highlighted.

Consequently, the user can determine markers 51 for which still images have already been stored.

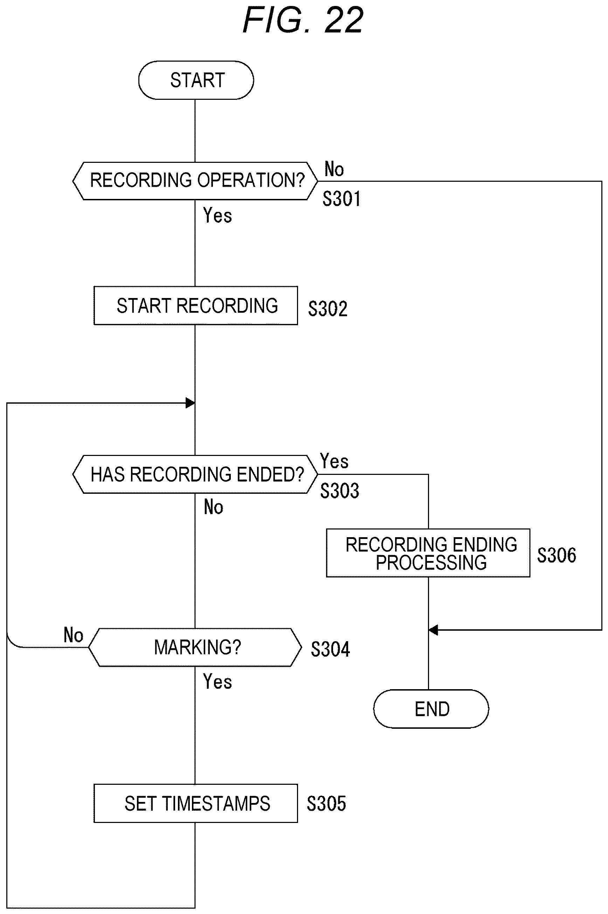

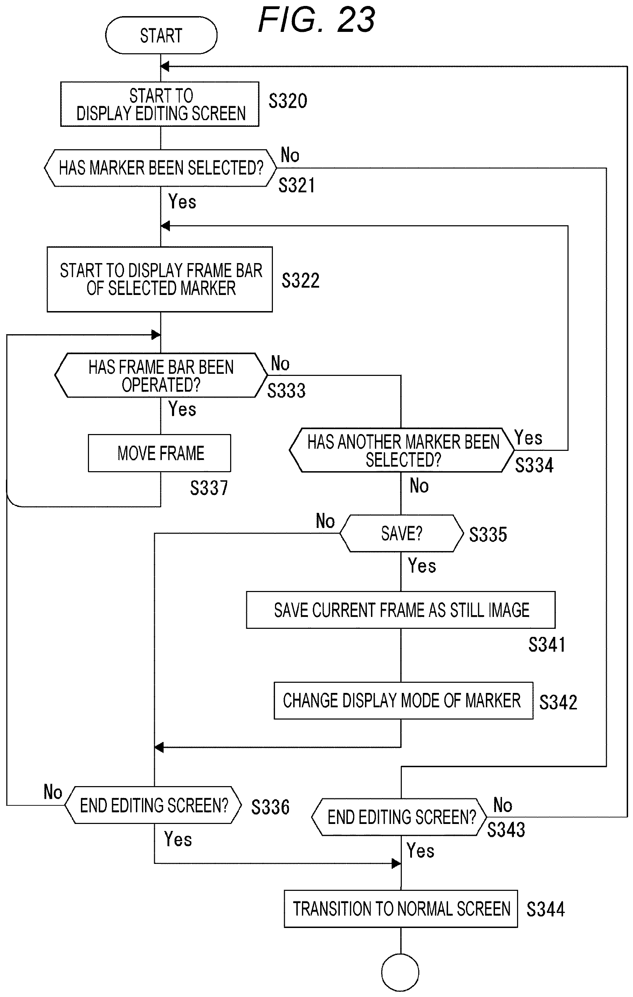

Examples of processing performed by the control unit 190 related to the marking as described above will be described with reference to Figs. 22 and 23.

Fig. 22 illustrates a process during the moving image storage (during the recording).

When the user uses the record icon 40 during the game play, the control unit 190 determines that a recording operation has been performed, proceeds from step S301 to step S302, and starts recording processing. That is, processing for storing each of pieces of frame data to be displayed on the screen as each of frames constituting a moving image is started.

During the recording, the control unit 190 monitors a recording end operation in step S303 and monitors a marking operation in step S304.

In the case of detecting a marking operation, the control unit 190 proceeds from step S304 to step S305, and sets a time stamp as a marking portion. That is, a time stamp MTC of a frame at a timing of the marking operation is stored.

When detecting the recording end operation, the control unit 190 proceeds to step S306, performs recording ending processing, and ends the process of Fig. 22. At this point of time, if a recording data file has been formed and the marking operation has been performed, the time stamp MTC according to the marking operation has been stored.

Fig. 23 illustrates an example of a process in a case where editing is performed on the editing screen as illustrated in Fig. 20.

In response to the user performing an operation for opening the editing screen, the control unit 190 performs processing for displaying the editing screen in step S320. For example, the control unit 190 displays a screen as illustrated in Fig. 20.

The playback image 30M in Fig. 20 may be automatically played back as a moving image, or a corresponding image may be displayed as the user performs an operation for moving the pointer 52.

In a state where the editing screen is displayed, the control unit 190 monitors an operation for selecting a marker 51 by the user in step S321.

In addition, in step S343, the control unit 190 monitors an operation for ending the editing screen.

In a case where the operation for ending the editing screen is detected, the control unit 190 proceeds to step S344, and transitions from the editing screen to a normal screen (for example, the game screen 30 or the like).

When detecting the operation for selecting a marker 51, the control unit 190 proceeds from step S321 to step S322, and starts to display a frame bar 55 corresponding to the selected marker 51. That is, a frame of the current time stamp MTC of the selected marker 51 and frames before and after the frame are displayed side by side. Furthermore, the playback image 30M becomes an image of the frame with the time stamp MTC of the marker 51.

In a state where the frame bar 55 is displayed for a certain marker 51, the control unit 190 monitors the user operation in a loop of steps S333, S334, S335, and S336.

When detecting that the user has performed an operation on the frame bar 55, the control unit 190 proceeds from step S333 to step S337, and controls frame movement on the frame bar 55. That is, the frame image is moved in a left-and-right direction to change the frame included in the selection frame 56. In response to this, a value of the corresponding time stamp MTC is also changed.

In a case where the user performs an operation for selecting another marker 51, the control unit 190 proceeds from step S334 to step S322, and displays a frame bar 55 corresponding to the newly selected marker 51.

In a case where the operation for ending the editing screen is detected, the control unit 190 proceeds from step S336 to step S344, and transitions to the normal screen (for example, the game screen 30 or the like).

In the case of detecting use of the storage icon 54 by the user, the control unit 190 proceeds from step S335 to step S341, and performs processing for storing the current frame as still image data. That is, storage processing is performed on the frame indicated in the selection frame 56 in the frame bar 55 at this time (the frame with the time stamp MTC at this time).

In step S342, the control unit 190 changes a display mode of the corresponding marker 51 as illustrated in Fig. 21, for example, to indicate that the storage has been performed.

Through the above processing, the user can select a marking operation position after recording the game screen and store still image data regarding an arbitrary scene.

Here, assignment of functions to the hardware keys will be described.

The operations for starting and stopping the recording of content screens of a game or the like described above are not limited to, for example, the operations from the extended function menu 21, and the operation functions may be assigned to the hardware keys.

In addition, recording may be performed only while a hardware key is pressed.

Furthermore, application to time-shift recording is also possible. For example, processing for recording a screen from R seconds before the hardware key is pressed down to S seconds after the hardware key is pressed down may be performed. For example, the game screen 30 or the like is always accumulated in the memory for a certain period of time by background processing, and processing for storing moving image data from R seconds before to S seconds after in the storage is performed in accordance with a user operation.

R seconds before and S seconds after may be fixed or may be set by the user.

In addition, the hardware keys may be assigned to operations such as start and stop of live streaming, muting and unmuting of sound, turning on and off of a camera, switching of a streaming screen to a dummy screen, and cancelation thereof.

### <5. Function Related to Notification>

An example of a processing function in various notification displays will be described below without being limited to the screenshot. In particular, the function is a function in a case where various notifications in the real world are performed in a situation where the user is immersed in an unreal world in game play or the like.

In a case, for example, it is assumed that the user is immersed in some work using the information processing apparatus 10 (smartphone). For example, the user is playing a game or watching a moving image. It is assumed that a notification about an event occurring in the real world occurs while the user is immersed in a world based on virtual reality (VR), augmented reality (AR), or the like.

What is appropriate for the user is a balance between not blocking the immersive experience and receiving important notifications that should interrupt the immersion. In addition, it is also desirable that it is not necessary to manually switch the setting.

It is desirable that the user can recognize only notifications that the user desires to receive even if the immersion is interrupted and that the user recognizes other notifications after an end of the immersion. Furthermore, it is considered that a notification method that completely blocks immersion is not desired.

Furthermore, the user also desires to grasp that a notification has come while maintaining immersion, and know details at a good timing for himself/herself in accordance with content of the notification.

In order to respond to such demands, it is conceivable to set levels of notification for the user. For example, the following is performed.

· Highest importance: A notification that needs to immediately stop the current immersion experience of the user
· High importance: A notification that need not immediately stop the current immersion experience but that needs an action for allowing the user to recognize it at an appropriate timing
· Moderate importance: A notification that allows the user to know that there is a notification to such an extent that the current immersive experience is not disturbed
· Low importance: A notification that does not disturb the current immersion experience of the user and that can be recognized after the immersion experience
· No importance: A notification that the user desires not to be displayed at all times

For example, a notification as an emergency alert such as an earthquake warning has the highest importance level. The importance levels, however, may vary depending on the user.

For example, an example of earthquake and other emergency alerts will be considered.

### [Highest Importance]

It is assumed that a user living in a certain region on a coast is playing a game with the information processing apparatus 10. At this time, an earthquake early warning of the area is issued. Estimated seismic intensity is 6, and there is a tsunami warning to an area where the user lives. In such a case, it is necessary to immediately end the game and start evacuation, and it is necessary to issue a notification through display and sound such that the immersion is completely blocked and the user is absolutely aware of the notification.

### [Low Importance]

It is assumed that a user who lives in a certain region is playing a game and an alert that does not affect the region is issued. In this case, the importance is not high. For example, a notification may be displayed after an end of the game, and notification content may be known.

[Low Importance] It is assumed that a certain alert is issued during a competition such as an offline e-sports tournament. In such a case, overall evacuation guidance by a management side is more important than behavior of individuals. In order for the management side to guide action of players, a notification is not displayed on the information processing apparatus 10 for competition of each player.

As in the above example, even notifications having the same content may have different levels of importance depending on the user.

Furthermore, the following examples can be considered as factors for determining the importance level of the notification for the user.

For example, the information processing apparatus 10 determines the importance level through comprehensive consideration of a context (a situation of the world, a personal situation, etc.) and the like in addition to an importance level of the notification for the user. For example, the processing is as follows.

· Content that the user is not currently interested in is not notified of even if the user was interested in it in the past.
· Content that the user is currently interested in is notified of even if the user was not interested in it in the past.
· Notification about information having similar content is not issued.
· A communication opportunity of a family member, a friend, or the like is not notified of for a certain period of time, but is notified of before a situation occurs where the person is offended or a trouble is caused to the person.

Furthermore, the information processing apparatus 10 may learn what timing the notification was opened in the past, and perform the notification in accordance with a result of the learning.

Furthermore, it is also conceivable that the information processing apparatus 10 automatically determines a timing for issuing a notification on the basis of life and behavior patterns of the user. For example, timing and a mode of notification are controlled for each importance level of notification in consideration of the following information elements.

· The user's behavior in each time period of the day
·Positional information (information obtained by, for example, detection of a moving speed and a moving distance by a GPS or determination of a connected network) regarding the user (information processing apparatus 10)
· Dependency on a main task (for example, notification of a task having high dependency, such as a voice chat app in a game, increases has a higher importance level)
· Frequency at which the user views the screen and frequency of operation
· Processing in the information processing apparatus 10 such as CPU and GPU
· Eyeball movement of the user detected by the camera
· Biological information regarding the user obtained by a watch-type terminal or the like and a distance to the terminal
· Sunrise and sunset times known from the positional information
· Brightness of a current location obtained by the illuminance sensor
· Brightness of color of a screen image

Various modes of notification can be considered for each importance level.

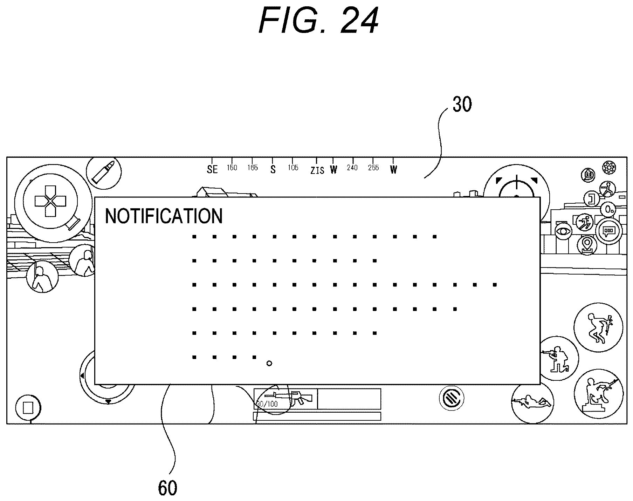

For example, as for the notification of the highest importance level, it is necessary to immediately notify the user without considering the timing. Furthermore, for example, as illustrated in Fig. 24, a notification dialog 60 is displayed using most of the area on the screen. An area of at least a majority of the screen area may be used.

As a result, even a user who is immersed in a game or the like can surely recognize the notification.

On the other hand, in a case where the notification level is high or moderate, it is desirable to allow the user to grasp that the notification has arrived to such an extent that the current immersion experience is not disturbed.

For example, on the display, a non-attention area for the user is set as a display position of notifications that does not disturb the immersion. For example, from the following three points, it is identified that the area is unimportant for the immersive experience, and notifications are displayed in the area.
· A location with few screen drawing updates
· A location where gaze time is short in the line-of-sight determination by the in-camera
· A location with few touch operations

The location with few screen drawing updates is a location where information that affects the current main experience is unlikely to be described.

The location where gaze time is short in the line-of-sight determination is a location where information that affects the current main experience (a game or the like) is unlikely to be described.

The location with few touch operations is a location unlikely to affect the operation of the current main experience.

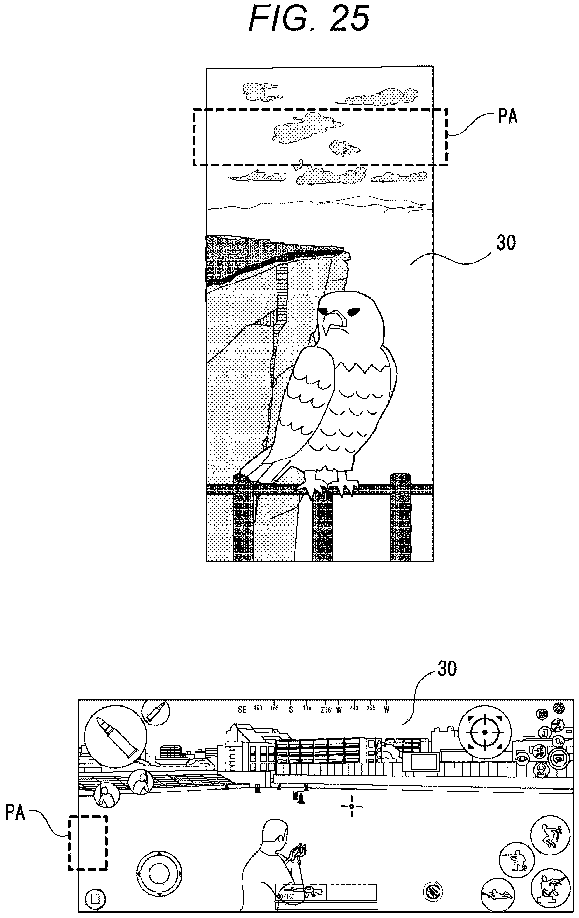

For example, an area indicated by a broken line PA in the game screen 30 in Fig. 25 corresponds to these. By displaying notifications in such an area, it is possible to prevent the immersive experience of the user from being disturbed.

In addition, a color expression for noticing a notification may be devised for the notification display on the game screen 30 or the like.

For example, a color tone of an image of the main experience displayed in the notification area determined by the above logic is analyzed, and notifications are displayed with a frame or a paint of an opposite color tone in hue, brightness, and saturation. This makes it easy for the user to notice even small notifications in a narrow area such as that indicated by the broken line PA.

In addition, size of a notification and content to be displayed in the notification may be changed in accordance with the level of the notification. For example, a display mode of a notification, such as only flashing of a dot, an icon, or a text message, is changed.

In addition, if the importance level is not the highest as the notification level, it may be determined whether or not to output the notification in accordance with a situation during the game.

In particular, when the user does not desire a notification to be output, the notification is not output, and when the user desires a notification to be output, only what the user desires is output.

This is exemplified as follows.

· Matchmaking: No notifications are output
· In a game lobby: Only notifications related to the current game play, including a voice chat, are output
· Privacy-sensitive situation: No notifications are output
· A situation in which the game transitions to another app for a moment but returns immediately: Only notifications related to a purpose of transition is output, and other notifications are not output.
· An end of the game: Notifications are output

For example, the following examples are conceivable for these determination methods.

It is possible to determine whether the game is currently in matchmaking by machine learning on the basis of whether or not the game app is displayed in a full screen, whether a drawing update frequency is high or update area is large, image analysis of a matchmaking screen, and whether a frequency of touch events of the user input to the game app is high.

It is possible to determine whether the user is currently in the game lobby by machine learning on the basis of whether or not the game app is displayed in a full screen, whether the drawing update frequency is low or the update area is small, the image analysis of the matchmaking screen, and whether the frequency of touch events of the user input to the game app is low.

Examples of work that concerns privacy during the game include live distribution, recording, screenshotting, and external display (capture board) connection. These can be determined by a fact that a function of a video output system other than an output to the display of the information processing apparatus 10 is operating.

Whether or not there is another person present in the same space (real space or virtual space) is also an element for determining a situation where privacy is concerned.

For example, a situation in which another person looks into the screen can be determined by the number of voices in the in-camera or the microphone or a direction in which the voice enters.

The presence of another person in the vicinity can also be determined by the number of voices in the microphone, the direction in which the voice enters, and volume of the voice.

The situation in which the user is in a vehicle can be determined from information regarding overloading on a seat, wearing of a seat belt, a camera mounted on the vehicle, and thermography.

A state of the virtual space can also be used to determine presence of another person.

The temporary transition from the game to another app can be determined by machine learning of a trend of times spent on other screens during transitions from the game screen to the game screen when the user moves back and forth between the game screen and the other screens.

In addition, that movement of an electroencephalogram does not change, that is, for example, that an activated state continues as a situation for the game, is also a determination element.

The end of the game, too, can be determined by machine learning of a trend of times spent on other screens during transitions from the game screen to the game screen when the user moves back and forth between the game screen and the other screens.

In addition, as the play habit of the user, learning such as playing for how many hours and from what time of what day of the week to what time can be used as a determination element of the end of the game.

In addition, a change in the movement of the electroencephalogram also serves as a determination element of the end of the game.

The following examples are examples of processing at a time when the game has temporarily transitioned to another app and when the game ends.

For example, when the user has exited from the game and is using another app, a screen shot of a game screen immediately before the user has exited or ended the game previously or a comment (for example, "Do you want to resume the game?") may be displayed on the screen. Note that either one of the screenshot and the comment may be displayed on the screen, or both may be simultaneously displayed on the screen. With such a display, the user can remember the game situation immediately before the end of the game, and can take an action such as resuming the game as necessary.

It is also conceivable to hand over notification settings according to one's own tendency between models.

A general tendency is initially reflected, and the user's own tendency is reflected by logging in. For example, the notification method is adapted to the user.

Furthermore, a terminal other than the information processing apparatus 10, for example, a console game machine, a mobile game machine, a PC, an AR/VR device, a watch-type terminal, an automobile (driving or riding together), or the like, may be connected, the tendency of the user himself/herself may be comprehensively analyzed, and the notification may be performed according to the tendency. In addition, it is conceivable that the notification method is also different depending on presence or absence of a fellow passenger for an automobile. For example, in a case where there is no fellow passenger, notification reflecting the tendency of the user himself/herself is performed, and in a case where there is a fellow passenger, notification based on a general tendency and not reflecting the tendency of the user himself/herself is performed. In addition, in a case where there is a fellow passenger, a notification reflecting the tendency of the fellow passenger may be made on the basis of data regarding the fellow passenger obtained from the server device or the like.

### <6. Example of Hardware Configuration>

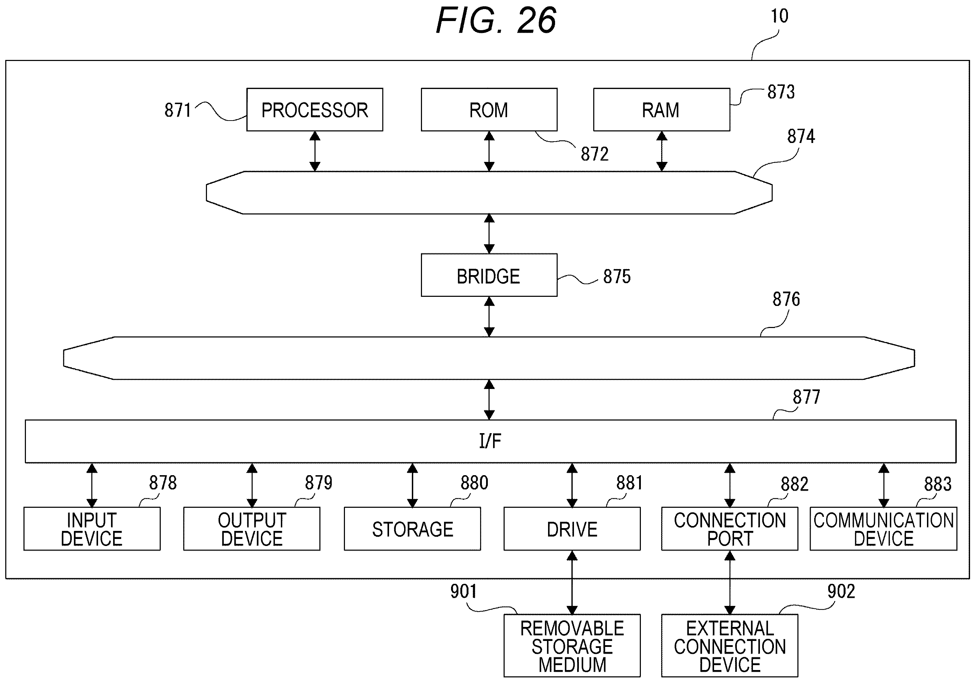

Next, an example of hardware configuration of the information processing apparatus 10 according to the embodiment of the present disclosure will be described. Fig. 26 is a block diagram illustrating the example of the hardware configuration of the information processing apparatus 10.

The information processing apparatus 10 includes, for example, a processor 871, a ROM 872, a RAM 873, a host bus 874, a bridge 875, an external bus 876, an interface 877, an input device 878, an output device 879, a storage 880, a drive 881, a connection port 882, and a communication device 883. Note that the hardware configuration described here is merely an example, and some of the components may be omitted. Furthermore, components other than those described here may be further included.

### (Processor 871)

The processor 871 functions as, for example, an arithmetic processing device or a control device, and controls the overall operation of each component or a part thereof on the basis of various programs and data stored in the ROM 872, the RAM 873, the storage 880, or a removable storage medium 901.

### (ROM 872 and RAM 873)

The ROM 872 is a means for storing programs to be read into the processor 871, data to be used for calculation, and the like. The RAM 873 temporarily or permanently stores, for example, a program to be read into the processor 871, various parameters that appropriately change when the program is executed, and the like.

### (Host Bus 874, Bridge 875, External Bus 876, and Interface 877)

The processor 871, the ROM 872, and the RAM 873 are mutually connected via, for example, the host bus 874 capable of high-speed data transmission. Meanwhile, the host bus 874 is connected to the external bus 876 having a relatively low data transmission speed via the bridge 875, for example. Furthermore, the external bus 876 is connected to various components via the interface 877.

### (Input Device 878)

As the input device 878, for example, a mouse, a keyboard, a touch panel, a button, a switch, a lever, or the like is used. Moreover, as the input device 878, a remote controller (hereinafter referred to as a remote) capable of transmitting a control signal using infrared rays or other radio waves may be used. Furthermore, the input device 878 includes an audio input device such as a microphone.

### (Output Device 879)

The output device 879 is a device capable of visually, auditorily, or tactilely notifying the user of obtained information, such as a display device such as an LCD, an organic EL, or the like, an audio output device such as a speaker, a headphone, or the like, a printer, a mobile phone, a facsimile, or the like.

### (Storage 880)

The storage 880 is a device for storing various types of data. As the storage 880, for example, a magnetic storage device such as a hard disk drive (HDD) or the like, a semiconductor storage device, an optical storage device, a magneto-optical storage device, or the like is used.

### (Drive 881)

The drive 881 is, for example, a device that reads information stored in the removable storage medium 901 such as a magnetic disk, an optical disc, a magneto-optical disk, or a semiconductor memory, or that writes information to the removable storage medium 901.

### (Removable Storage Medium 901)

Examples of the removable storage medium 901 include various semiconductor storage media, a digital versatile disc (DVD) medium, a Blu-ray (registered trademark) medium, and an HD-DVD medium. It is needless to say that the removable storage medium 901 may be, for example, an IC card equipped with a contactless IC chip, an electronic device, or the like.

### (Connection Port 882)

The connection port 882 is a port for connecting an external connection device 902 such as a universal serial bus (USB) port, an IEEE 1394 port, a small computer system interface (SCSI), an RS-232C port, an optical audio terminal, or the like.

### (External Connection Device 902)

The external connection device 902 is, for example, a printer, a portable music player, a digital camera, a digital video camera, an IC recorder, or the like.

### (Communication Device 883)

The communication device 883 is a communication device for connecting to a network, and is, for example, a wired or wireless local area network (LAN), Bluetooth (registered trademark), a communication card for wireless USB (WUSB), a router for optical communication, a router for asymmetric digital subscriber line (ADSL), a modem for various types of communication, or the like.

The above configuration of the information processing apparatus 10 can be considered as, for example, configuration of a smartphone or a PC on which the first application is activated.

### <7. Summary and Modifications>

According to the above-described embodiment, the following effects can be achieved.

The information processing apparatus 10 according to the embodiment includes the control unit 190 that performs processing for storing an image displayed on a screen in response to a screenshot operation, and that performs processing for determining a group operation of one cycle for one or a plurality of screenshot operations, and displaying a notification according to the screenshot operation in response to a determination that the group operation has ended.

That is, the control unit 190 determines a cycle as a group operation, and displays the notification dialog 28 in a state where one or a plurality of screenshot operations are collected. As a result, even if a next screenshot operation is performed at a relatively short interval, it is possible to avoid the notification dialog 28 from being shown in a still image to be stored, which is suitable for continuous capture.

In addition, it is not necessary for the user to delete the notification dialog 28 by a swipe operation or the like, and the user can enter the next screenshot operation.

In the embodiment, an example has been described in which the control unit 190 defines use of one hardware key provided for the housing of the information processing apparatus 10 as a screenshot operation (See Figs. 8, 9, and 10).

Since the hardware key is assigned as the control of the screenshot operation, the user can perform the screenshot operation regardless of the state of the screen.

In the case of a software key, because it takes time from a moment at which the user desires to capture an image to an actual start of capture, there is a case where the user misses a moment at which the user desires to capture with respect to a scene that moves in units of milliseconds, but the hardware key enables immediate capture by one-touch operation.

Furthermore, in the case of a software key, a next capture operation cannot be performed until completion of processing for saving a previous screenshot. For example, since the single SS icon 26 or the like cannot be pressed, continuous capture cannot be performed and a desired moment may be missed. On the other hand, in the case of the use of the hardware key, since there is no restriction on the screen, it is also possible to perform continuous operations in a short period of time.

In the embodiment, an example has been described in which the control unit 190 determines that a group operation of one cycle has ended in a case where a next screenshot operation is not performed within the threshold time from a latest screenshot operation (See Figs. 11 and 14).

For example, if the next screenshot operation is performed within the threshold time as N seconds, it is included in one cycle. Then, if the next screenshot operation is not performed within the threshold time, it is determined that one cycle has ended.

As a result, in a case where the screenshot operation is performed a plurality of times in a relatively short time, the notification dialog 28 can be output after the end of the screenshot operation. In other words, it is possible to display the notification dialog 28 every time the screenshot operation is performed to eliminate the interference with the screenshot operation.

Note that an example other than determining the end of the group operation only by the elapsed time from the latest screenshot operation is also conceivable.

For example, when the total number of screenshot operations reaches a predetermined maximum number, it may be determined that the cycle has ended even before the threshold time elapses.

Alternatively, the determination may be made only on the basis of the number of operations.

Furthermore, the cycle end determination may be performed on the basis of a position of the user's finger with respect to the information processing apparatus 10 or the like. For example, in a case where the camera key 15 is assigned to the screenshot operation, if it is detected that the user's finger has moved away from the camera key 15, it is determined that the cycle has ended.

In the embodiment, an example has been described in which the control unit 190 performs processing for displaying a notification according to screenshot operations in a case where the next screenshot operation has been performed within the threshold time from the latest screenshot operation but a storage processing error has occurred (see Figs. 11 and 14).

For example, even if the next screenshot operation is performed within a threshold time as N seconds, in a case where an error occurs, the notification dialog 28 is immediately displayed. This is because there is a high possibility that the user cannot appropriately store a still image even if the user performs the screenshot operation thereafter.

In the embodiment, an example has been described in which the control unit 190 sets (including updating) the threshold time according to the content to be activated (see Fig. 17).

The number and frequency of screenshot operations, a request for continuous capture, and the like are different depending on the game title, and are considered to be different for each content title including not only games but also moving image content and the like. Therefore, by setting the threshold time (N seconds) according to the content to be activated, the cycle determination can be performed according to the content.

For example, it is conceivable that the setting according to the content is obtained from a server device that communicates at the time of game activation, or a threshold time for each content is stored in advance in the information processing apparatus 10 and read.

In the embodiment, an example has been described in which the control unit 190 sets (including update) the threshold time on the basis of the operation history of the user (see Figs. 16 and 18).

Since there are individual differences regarding the screenshot operation, default settings are not always appropriate. Therefore, the control unit 190 analyzes the distribution data regarding the time between the image capturing and the image capturing from the operation history of the user, and sets or updates the threshold time (N seconds). As a result, the cycle determination can be optimized according to the user himself/herself.

In the embodiment, an example has been described in which the control unit 190 performs the processing related to the setting (including update) based on the operation history of the user for the threshold time at the timing determined on the basis of the times of the day when the user uses the information processing apparatus 10 (see Fig. 18).

The learning and updating of the threshold time (N seconds) are performed at a non-use time of the day on the basis of times during which the information processing apparatus 10 is unlikely to be used learned. That is, the learning and updating are performed at a time of the day when the CPU load of the information processing apparatus 10 is low. As a result, the update of the threshold time does not become a processing burden.

In the embodiment, an example has been described in which the control unit 190 performs processing for displaying information related to the processing corresponding to one or a plurality of screenshot operations by a group operation as a notification according to the screenshot operation(s) (see Figs. 12, 13, and 14).

For example, in a case where one image has been captured in step S110 in Fig. 14 in one cycle, the control unit 190 causes display related to the one screenshot to be executed, and in a case where a plurality of images has been captured in one cycle, the control unit 190 causes display related to processing corresponding to the plurality of screenshot operations, for example, display related to processing for storing still images, to be executed. As a result, even in a case where a plurality of operations is set as one cycle, appropriate information can be presented to the user.

In the embodiment, an example has been described in which, in a case where the control unit 190 displays information related to a plurality of screenshot operations by a group operation as a notification according to the screenshot operations and storage processing partially includes errors, the control unit 190 performs processing for displaying the number of screenshots stored and the number of errors (see Figs. 12 and 14).

For example, when a plurality of images has been captured in one cycle and there have been errors in a subset of the images, the control unit 190 displays the number of images stored and the number of errors in step S120 in Fig. 14. As a result, even in a case where an error is included with a plurality of times as one cycle, the fact can be appropriately presented to the user.

In the embodiment, in a case where information regarding one screenshot operation by the group operation is displayed as a notification according to the screenshot operation, the control unit 190 executes a notification including display that allows the user to transition to post-processing of a stored image. In addition, in the embodiment, in a case where information regarding a plurality of screenshot operations by the group operation is displayed as a notification according to the screenshot operations, the control unit 190 executes a notification that does not include the display that allows the user to transition to post-processing of stored images (see Figs. 13 and 14).

For example, in the case of single capture as illustrated in Figs. 13A and 13B, the share button 44, the edit button 45, and the delete button 46 are displayed, but in the case of capturing a plurality of images, these buttons are not displayed as illustrated in Figs. 13C and 13D. In the case of a plurality of images, since a target image cannot be determined, the display related to the post-processing is not included in the notification dialog 28, and the notification is simplified.

In the embodiment, an example has been described in which the control unit 190 performs the marking processing for storing positions in a moving image according to a specific operation in moving image storage and the UI processing for displaying the stored marking positions in the moving image and enabling storage of an image of the set marking positions (see Figs. 19, 20, 21, 22, and 23).

For example, the control unit 190 enables selection of a marker 51 on a screen as illustrated in Fig. 20 and displays an image of the marker 51. Then, the storage icon 54 enables still image storage. As a result, marking can be performed by an operation similar to a normal screenshot during the moving image storage, and the marking can be finally stored as a still image.

In addition, when the marking operation is the same operation as the screenshot, for example, the use of the camera key 15, the user can perform the marking operation during the moving image storage by an intuitive operation.

In the embodiment, an example has been described in which the control unit 190 performs the UI processing in such a way as to enable adjustment of marking positions by user operations (see Figs. 20 and 23).

For example, the control unit 190 enables selection of a marker 51 on the screen as illustrated in Fig. 20, and enables the user to adjust a marking position with the frame bar 55. As a result, the user can further finely adjust a position at which a marking operation has been performed during the moving image storage and store the position in the similar manner to the screenshot.

In the embodiment, an example has been described in which the control unit 190 determines importance levels for various notifications and performs processing for displaying notification content in a display mode according to the importance levels.

For example, the control unit 190 classifies notifications into several levels from the highest importance to no importance, and executes display in modes in which recognizability for the user is changed according to the importance levels. As a result, it is possible to achieve appropriate notification display capable of adjusting the real world and a non-real world for the user immersed in a game or the like.

In the embodiment, an example has been described in which the control unit 190 performs processing for displaying notification content with area that occupies a majority of a display area for a notification having the highest importance level.

For example, the control unit 190 displays the notification having the highest importance level such that the user certainly recognizes the notification as in the notification dialog 60 in Fig. 24. This allows the user to recognize important matters in the real world even while the user is immersed in a game.

In the embodiment, an example has been described in which the control unit 190 performs processing for displaying notification content in the non-attention area of the screen for a notification having a certain importance level.

For example, in the case of a notification whose importance level is not very high among the importance levels but that the user desires to know that the notification has come, notification content is displayed in the non-attention area that does not hinder the immersion experience of the user as illustrated in Fig. 25. This can prevent the user's experience in the unreal world from being unnecessarily disturbed.

In the embodiment, an example has been described in which the control unit 190 performs processing for displaying notification content at timings or in display modes according to game situations on screens of game content for various notifications.

During game activation, the control unit 190 determines whether or not to display a notification or selects a display mode according to various game situations. As a result, a notification is presented to the user in a desirable state during activation of game content.

In addition, by performing processing for displaying notification content prompting the user to resume game content on a screen of content other than the game content, too, the control unit 190 presents a desirable notification to the user when the game is interrupted.

A program in the embodiment is a program for causing, for example, a CPU, a DSP, or the like, or a device including one of these to execute processes as illustrated in Figs. 14, 17, 18, 22, and 23.

The program according to the embodiment is a program causing the information processing apparatus 10 to perform processing for storing an image displayed on a screen in response to a screenshot operation, and perform processing for determining a group operation for one or a plurality of screenshot operations, and displaying a notification according to the screenshot operation in response to a determination that the group operation has ended. With such a program, the information processing apparatus 10 in the present disclosure can be easily achieved using a smartphone, a PC, or the like.

Such a program can be stored in advance in a hard disk drive (HDD) as a storage medium built in a device such as a computer device, a ROM in a microcomputer including a CPU, or the like.

Alternatively, the program can be temporarily or permanently stored (recorded) in a removable storage medium such as a flexible disk, a compact disc read only memory (CD-ROM), a magneto optical (MO) disk, a digital versatile disc (DVD), a Blu-ray Disc (registered trademark), a magnetic disk, a semiconductor memory, or a memory card. Such a removable storage medium can be provided as what is called package software.

Furthermore, such a program can be installed from the removable storage medium into the personal computer and the like, or can be downloaded from a download site through a network such as a local area network (LAN) or the Internet.

Note that the effects described in the present specification are merely examples and are not limited, and other effects may be achieved.

Note that the present technology can also employ the following configurations.
(1) An information processing apparatus including:
   a control unit that performs processing for storing an image displayed on a screen in response to a screenshot operation, and that performs processing for determining a group operation for one or a plurality of the screenshot operations, and displaying a notification according to the screenshot operation in response to a determination that the group operation has ended.
(2) The information processing apparatus according to (1), in which
   the control unit determines an operation of one hardware key provided for a housing as the screenshot operation.
(3) The information processing apparatus according to (1) or (2), in which
   the control unit
   determines that the group operation has ended in a case where a next screenshot operation is not performed within a threshold time from a latest screenshot operation.
(4) The information processing apparatus according to any one of (1) to (3), in which
   the control unit
   performs processing for displaying a notification according to screenshot operations in a case where a next screenshot operation has been performed within a threshold time from a latest screenshot operation but a storage processing error has occurred.
(5) The information processing apparatus according to (3) or (4), in which
   the control unit
   sets the threshold time according to content to be activated.
(6) The information processing apparatus according to any one of (3) to (5), in which
   the control unit
   sets the threshold time on the basis of an operation history of a user.
(7) The information processing apparatus according to (6), in which
   the control unit
   performs processing related to setting of the threshold time based on the operation history of the user at a timing determined on the basis of a time of day when the user uses the information processing apparatus.
(8) The information processing apparatus according to any one of (1) to (7), in which
   the control unit
   performs processing for displaying information related to the processing according to the one or the plurality of screenshot operations by the group operation as the notification according to the screenshot operation.
(9) The information processing apparatus according to (8), in which
   the control unit
   in a case where the control unit displays information related to a plurality of screenshot operations by the group operation as the notification according to the screenshot operations and storage processing partially includes errors, performs processing for displaying a number of screenshots stored and a number of errors.
(10) The information processing apparatus according to (8) or (9), in which
   the control unit
   in a case where the control unit displays information related to one screenshot operation by the group operation as the notification according to the screenshot operation, performs a notification including a display for allowing a user to transition to post-processing of a stored image, and
   in a case where the control unit displays information related to a plurality of screenshot operations by the group operation as the notification according to the screenshot operation, performs a notification that does not include a display for allowing the user to transition to post-processing of stored images.
(11) The information processing apparatus according to any one of (1) to (10), in which
   the control unit
   performs marking processing for storing a position in a moving image according to a specific operation in moving image storage, and
   performs user interface processing for displaying a stored marking position in the moving image and enabling storage of an image of the set marking position.
(12) The information processing apparatus according to (11), in which
   the control unit
   performs the user interface processing in such a way as to enable adjustment of the marking position by a user operation.
(13) The information processing apparatus according to any one of (1) to (10), in which
   the control unit
   determines importance levels for various notifications, and performs processing for displaying notification content in display modes according to the importance levels.
(14) The information processing apparatus according to (13), in which
   the control unit
   performs processing for displaying notification content with area that occupies a majority of a display area for a notification having a highest importance level.
(15) The information processing apparatus according to (13) or (14), in which
   the control unit
   performs processing for displaying notification content in a non-attention area of the screen for a notification having a certain importance level.
(16) The information processing apparatus according to any one of (1) to (15), in which
   the control unit
   performs processing for displaying notification content at timings or in display modes according to game situations on screens of game content for various notifications.
(17) The information processing apparatus according to (16), in which
   the control unit
   performs processing for displaying notification content prompting a user to resume game content on a screen of content other than the game content.
(18) An information processing method performed by an information processing apparatus, the information processing method including:
   performing processing for storing an image displayed on a screen in response to a screenshot operation, determining a group operation for one or a plurality of the screenshot operations, and performing processing for displaying a notification according to the screenshot operation in response to a determination that the group operation has ended.
(19) A program causing an information processing apparatus to execute a process including:
   performing processing for storing an image displayed on a screen in response to a screenshot operation, determining a group operation for one or a plurality of the screenshot operations, and performing processing for displaying a notification according to the screenshot operation in response to a determination that the group operation has ended.

### REFERENCE SIGNS LIST

- 10: Information processing apparatus
- 11: Volume key
- 14: Power key
- 15: Camera key
- 28: Notification dialog
- 30: Game screen
- 40: Record icon
- 41: Text message
- 42: Thumbnail
- 44: Share button
- 45: Edit button
- 46: Delete button
- 50: Sequence bar
- 51: Marker
- 52: Pointer
- 54: Storage icon
- 55: Frame bar
- 56: Selection frame
- 190: Control unit

## Claims

1. An information processing apparatus comprising:
a control unit that performs processing for storing an image displayed on a screen in response to a screenshot operation, and that performs processing for determining a group operation for one or a plurality of the screenshot operations, and displaying a notification according to the screenshot operation in response to a determination that the group operation has ended.

2. The information processing apparatus according to claim 1, wherein
the control unit determines an operation of one hardware key provided for a housing as the screenshot operation.

3. The information processing apparatus according to claim 1, wherein
the control unit
determines that the group operation has ended in a case where a next screenshot operation is not performed within a threshold time from a latest screenshot operation.

4. The information processing apparatus according to claim 1, wherein
the control unit
performs processing for displaying a notification according to screenshot operations in a case where a next screenshot operation has been performed within a threshold time from a latest screenshot operation but a storage processing error has occurred.

5. The information processing apparatus according to claim 3, wherein
the control unit
sets the threshold time according to content to be activated.

6. The information processing apparatus according to claim 3, wherein
the control unit
sets the threshold time on a basis of an operation history of a user.

7. The information processing apparatus according to claim 6, wherein
the control unit
performs processing related to setting of the threshold time based on the operation history of the user at a timing determined on a basis of a time of day when the user uses the information processing apparatus.

8. The information processing apparatus according to claim 1, wherein
the control unit
performs processing for displaying information related to the processing according to the one or the plurality of screenshot operations by the group operation as the notification according to the screenshot operation.

9. The information processing apparatus according to claim 8, wherein
the control unit
in a case where the control unit displays information related to a plurality of screenshot operations by the group operation as the notification according to the screenshot operations and storage processing partially includes errors, performs processing for displaying a number of screenshots stored and a number of errors.

10. The information processing apparatus according to claim 8, wherein
the control unit
in a case where the control unit displays information related to one screenshot operation by the group operation as the notification according to the screenshot operation, performs a notification including a display for allowing a user to transition to post-processing of a stored image, and
in a case where the control unit displays information related to a plurality of screenshot operations by the group operation as the notification according to the screenshot operation, performs a notification that does not include a display for allowing the user to transition to post-processing of stored images.

11. The information processing apparatus according to claim 1, wherein
the control unit
performs marking processing for storing a position in a moving image according to a specific operation in moving image storage, and
performs user interface processing for displaying a stored marking position in the moving image and enabling storage of an image of the set marking position.

12. The information processing apparatus according to claim 11, wherein
the control unit
performs the user interface processing in such a way as to enable adjustment of the marking position by a user operation.

13. The information processing apparatus according to claim 1, wherein
the control unit
determines importance levels for various notifications, and performs processing for displaying notification content in display modes according to the importance levels.

14. The information processing apparatus according to claim 13, wherein
the control unit
performs processing for displaying notification content with area that occupies a majority of a display area for a notification having a highest importance level.

15. The information processing apparatus according to claim 13, wherein
the control unit
performs processing for displaying notification content in a non-attention area of the screen for a notification having a certain importance level.

16. The information processing apparatus according to claim 1, wherein
the control unit
performs processing for displaying notification content at timings or in display modes according to game situations on screens of game content for various notifications.

17. The information processing apparatus according to claim 16, wherein
the control unit
performs processing for displaying notification content prompting a user to resume game content on a screen of content other than the game content.

18. An information processing method performed by an information processing apparatus, the information processing method comprising:
performing processing for storing an image displayed on a screen in response to a screenshot operation, determining a group operation for one or a plurality of the screenshot operations, and performing processing for displaying a notification according to the screenshot operation in response to a determination that the group operation has ended.

19. A program causing an information processing apparatus to execute a process comprising:
performing processing for storing an image displayed on a screen in response to a screenshot operation, determining a group operation for one or a plurality of the screenshot operations, and performing processing for displaying a notification according to the screenshot operation in response to a determination that the group operation has ended.
